# EUROPEAN PATENT APPLICATION

(11) **EP 1 898 365 A1**
(43) Date of publication of application: **12.03.2008**
(21) Application number: 07016377.9
(22) Date of filing: 21.08.2007
(51) Int. Cl.: G07D 7/12

(54) **Method and apparatus for verifying the authenticity of an item by detecting encoded luminescent security markers**

(30) Priority: 23.08.2006 US 839648 P
(71) Applicant: E. I. DU PONT DE NEMOURS AND COMPANY, Wilmington, DE 19805 (US)
(72) Inventor: Blanchard, Elwood Neal, Wilmington, Delaware 19803 (US); Crawford, Michaël Karl, Glen Mills, Pennsylvania 19342 (US); Emms, Phil Andrew, Elkton, Maryland 21921 (US); McQuade, Michaël Robert, Greenville, Delaware 19807 (US)
(74) Representative: Hughes, Andrea Michelle

(57) **Abstract**

An apparatus for verifying, under ambient lighting conditions, the authenticity of an optical security mark on an item, the mark comprising a luminescent material which absorbs light within a first predetermined range of wavelengths and emits luminescence within a plurality of other predetermined wavelength ranges with a predetermined characteristic time response. The apparatus distinguishes the luminescence of the mark from fluorescence the item may have by distinguishing the slower luminescence decay rate of the security mark from the faster decay rate of the inherent fluorescence. The apparatus comprises an optical arrangement, having an illumination assembly and a luminescence detector assembly, and a signal processor assembly, all contained in a single housing. The illumination assembly and the luminescence detector assembly have a common focusing lens and are arranged along a common axis to illuminate the security mark and to detect emitted light from the security mark in a retro-reflective manner.

## Description

This application claims priority to US Provisional Application 60/839,648, filed August 23, 2006.

### BACKGROUND OF THE INVENTION

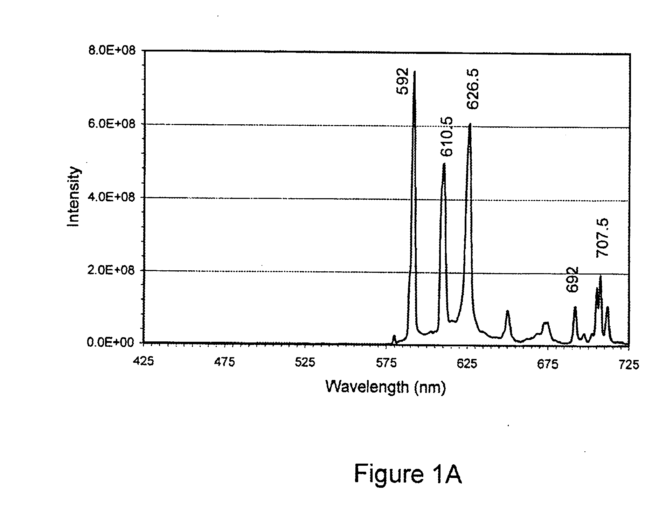

The present invention relates to an apparatus for verifying the authenticity of optical security marks, the marks comprising luminescent materials which absorb light within a first predetermined range of wavelengths and emit luminescence within a plurality of predetermined wavelength ranges.
Numerous materials and systems have been set forth to provide materials and methods for encoding fluorescent materials in security documents such as banknotes, on labels, or directly onto items whose authenticity needs to be ascertained. Each of these previous attempts has suffered from certain deficiencies or disadvantages.
Typical of the prior art is United States published patent application 2003/0032192 A1 ('192), which describes luminescent security marker materials and a method of verifying authenticity of the marker material by comparing emission levels at wavelengths of one or more expected emission peaks with nearby wavelengths where low or no emission is expected. United States published patent application 2004/0262547 A1 ('547) describes a system that implements a method of extracting a signature from a luminescent particle marker by verifying that certain predefined emission peaks are present in the excited material. Measuring the intensity at each peak and measuring an associated decay rate are stated to yield signature elements which form a high degree of uniqueness and therefore a "secure" system.
The method described in the '547 published application might look for luminescence intensity at 592, 610.5, and 626.5 nanometers (nm), such as shown in Figure 1A, using narrow pass band filters. This method, however, does not consider the possible presence of "counterfeit" marker materials that emit at these wavelengths and that also emit at other intermediate wavelengths. The '547 system thus does not fully protect against a broadband emitting counterfeit marker which emits at the exemplary wavelengths and also emits at other intermediate wavelengths. Organic dyes, for instance, are available that have broad emission peaks spanning the wavelengths that the '547 application looks for. The '547 application also does not address some of the practical issues involved in authenticating a marker outside the laboratory environment. Strong sources of ambient illumination, such as sunlight, and artificial illumination, such as fluorescent lamps, complicate the authentication process. Sunlight provides a steady state of interfering background illumination, while fluorescent lamps provide an interfering background which typically varies at the power line frequency, typically 50 or 60 hertz.
The presence of fluorescence in the substrate material being examined also complicates the authentication process. A security marker product would typically be applied directly to an item to be authenticated, to packaging material surrounding the item or to a hang tag attached to the item. It is known that many packaging materials fluoresce in their unadulterated state. In particular, many paper products have brighteners, such as organic dyes, added to them during manufacture. Many polymers are also known to fluoresce. The effect of the substrate fluorescence, when combined with the security marker luminescence, must be minimized so that the luminescent security mark may be accurately authenticated.
U.S. Patent 6,473,165 describes an authentication system that illuminates an object to be authenticated with a broadband light source and detects a light signal reflected from or transmitted through the object, where the optical detector is selected from a spectrophotometer, a spectrograph or combinations thereof. This patent also describes a transport device for transporting objects past the source. Such a system is inherently complex and would be impractical in an uncontrolled environment, such as where ambient lighting is present.
There is a need for an apparatus that is self-contained, readily portable, and capable of operating on battery power that can authenticate luminescent security marks under ambient lighting conditions on objects having inherent fluorescence.

### Summary of the Invention

The present invention is an apparatus for verifying the authenticity of an optical security mark placed on a substrate. The apparatus separates the luminescence of the security mark from the fluorescence of the substrate by distinguishing the slower luminescence decay rate of the security mark from the faster decay rate of the substrate fluorescence. The security mark comprises a luminescent material which absorbs light within a first predetermined range of wavelengths and which emits luminescence within a plurality of other predetermined wavelength ranges with a characteristic time response. The apparatus comprises an optical arrangement, comprising an illumination assembly, a luminescence detector assembly and a signal processor assembly, all contained in a single housing. The illumination assembly and the luminescence detector assembly have a common focusing lens and are arranged along a common primary axis to illuminate the security mark and to detect emitted light from the security mark in a retro-reflective manner.

The illumination assembly includes: a pulsed source of light comprising a light source and a collimating lens, a first filter, a wavelength-selective beam splitter, a focusing lens, and a monitoring photodetector. The duration of each pulse and the pulse repetition frequency of the pulsed source are predetermined and are selected in accordance with the luminescence characteristic time response of the security mark material. The first narrow band-pass filter in the illumination assembly passes only a first predetermined wavelength range of light, selected to match an absorption band of the luminescent material in the security mark. The wavelength-selective beam splitter is positioned along the common primary axis for reflecting almost all of the first wavelength range of light and directing the light along the primary axis to a focusing lens. The focusing lens is positioned on the primary axis for focusing the first wavelength range of light onto the security mark to excite luminescence in the security mark. A small portion of light not reflected passes through the wavelength-selective beam splitter and is focused onto a monitoring photodetector to monitor the intensity of the pulsed illumination source.
The luminescence detector assembly, for detecting the light emitted by luminescent material in the security mark and for converting the detected emitted light into an electrical signal, includes a plurality of photodetector assemblies arranged along the primary axis. Each photodetector assembly comprises an optical divider positioned on the primary axis, and a band-pass optical filter, a lens, and a photodetector arranged along a secondary axis. The optical divider reflects a portion of the substantially collimated luminescence from the primary axis onto the secondary axis. The optical divider may divide the light based upon intensity or upon wavelength. In an intensity-type divider, also called a non-wavelength selective beamsplitter, a portion of all the incident wavlengths are reflected and the remaining portion are transmitted. In a wavelength-selective optical divider, also called a wavelength-selective beamsplitter, some of the wavelengths of light are reflected and the remaining wavelengths are transmitted. The band-pass optical filter transmits a predetermined range of wavelengths of interest, selected in accordance with the spectral properties of the luminescent material, to the focusing lens and the photodetector. The focusing lens focuses the substantially collimated light onto the photodetector so that the illuminated area of the security mark is imaged onto the photodetector. The photodetector detects the light within the wavelength band of interest and converts the detected emitted light into an electrical signal.
The multiple photodetectors of the luminescence detector assembly are each positioned at the same distance from the security mark to insure that each photodetector views the same area of the security mark that was excited by the illumination source.
The signal processor assembly comprises a timing and control unit and a signal processor that receives the electrical signals from each of the plurality of photodetectors corresponding to each pulse of light from the illuminating assembly and determines the authenticity of the luminescent security mark. The timing and control unit generates a time reference signal corresponding to the occurrence of each illumination pulse and the signal processor generates a reference level from the detected output of the monitoring photodetector in the illumination assembly and stores the reference level in a memory. The signal processor samples the outputs of each of the plurality of photodetectors at predetermined time intervals after the time reference signal. The sampling corresponds to the characteristic time response of the luminescent material. The sampled outputs are optionally normalized using the stored reference level, previously stored in the memory. Samples are collected for a predetermined number of illumination pulses and the corresponding samples from each photodetector are then averaged over the predetermined number of illumination pulses.
To determine the authenticity of the luminescent security mark, the signal processor first selects samples of the averaged signals from each photodetector at corresponding times after the time reference signal. The signal processor then determines the ratios of the selected photodetector signal samples, and compares the ratios of the signals corresponding to the wavelength bands of interest to expected ratios of luminescence for the luminescent material. These wavelength bands of interest include multiple predetermined wavelength bands of expected luminescence and may include bands where luminescence is not expected. The signal processor then logically combines the results of the ratio comparisons to determine the authenticity of the luminescent security mark.
In operation, a timing signal is generated and the light source in the illumination assembly is pulsed. The first filter passes only the first wavelength range known to excite luminescence in the security mark.
The collimating lens substantially collimates the light, the first wavelength-selective beam splitter reflects most of the light from the illumination source along the primary axis through a focusing lens, which focuses it onto the security mark. The monitoring photodetector monitors the output intensity of the pulse from the illumination source and provides a reference signal to the signal processor.
Luminescence emitted from the security mark is collected by the focusing lens which forms a substantially collimated beam. The substantially collimated luminescence passes through the wavelength-selective beam splitter along the primary axis to the luminescence detector assembly. Each optical divider of each photodetector assembly along the primary axis reflects a portion of the beam to a secondary axis. The light on the secondary axis passes through a band-pass optical filter and is focused onto the photodetector. The photodetector detects light within a specific range of wavelengths, according to the band-pass filter within that particular photodetector assembly.
Each photodetector produces an electrical signal that is transmitted to the signal processor assembly. The signal processor assembly samples the electrical signals at predetermined time intervals, using the timing reference signal, in accordance with the known characteristic time response of the luminescent material in the security mark. Since the substrate fluorescence in the item on which the security mark is applied typically has a much faster decay rate than the luminescent material in the security mark, by simply waiting an appropriate time interval before sampling the photodetector signals, the substrate fluorescence is ignored.
Each photodetector assembly may be used to verify either the presence or absence of luminescence emissions within a predetermined wavelength range of interest. One or more photodetector assemblies may be used with an associated band-pass filter to verify the presence of an expected predetermined luminescence wavelength range corresponding to a peak in the emission spectrum. One or more other photodetectors may also be used with an associated band-pass filter to verify the absence of luminescence emissions within one or more wavelength ranges corresponding to valleys of the expected emission spectrum. Each band-pass filter associated with a particular photodetector might be either a narrow or a relatively wide bandwidth filter to span the spectrum wavelength ranges where luminescence is expected or not expected to occur.
The multi-photodetector arrangement described herein may incorporate whatever number of optical dividers, band-pass optical filters and photodetectors are required to provide verification, at the required level of confidence, that the luminescent material is the intended security mark and not a counterfeit.
The signal processor assembly optionally uses the illumination source monitor signal to first normalize the samples from the photodetector assemblies. The samples taken at corresponding times are then averaged for a predetermined number of excitation pulses. By comparing the samples at corresponding times from different photodetectors to predefined criteria and then comparing the ratios of the corresponding time samples from different photodetectors to predefined criteria, the signal processor assembly may logically combine these results to verify the authenticity of the luminescent material.
By pulsing the illumination source at a predetermined pulse repetition rate for a predetermined time interval the signal processor assembly may implement a technique analogous to that known as "synchronous detection" to minimize the effects of ambient illumination. Although the ambient illumination may contain wavelengths within the emission range of the luminescent material of the security mark, that ambient light will not occur at the predetermined pulse repetition rate. By detecting only the luminescence that occurs at a predetermined time delay after the timing reference signal, the effect of ambient light will be minimized.

### BRIEF DESCRIPTION OF THE FIGURES

Figure 1A shows a typical emission spectrum of a (Kasei Optonix KX-504) luminescent material useful for a security mark with the wavelengths of the luminescence peaks labeled;
Figure 1B shows an emission spectrum of GTE Sylvania Gd₂O₂S:Tb (Type 2611) phosphor also useful for a security mark with the wavelengths of luminescence peaks labeled;
Figure 1C shows an emission spectrum of a mixture of the phosphor of Figure 1A (Kasei Optonix KX-504) and the phosphor of Figure 1B (GTE Sylvania Type 2611);
Figure 1D shows the reflectivity spectrum of a "green" reflective beamsplitter;
Figure 1E shows the reflectivity spectrum of a "red" reflective beamsplitter;
Figure 1F shows the convolution of the reflectivity spectrum of the beamsplitter of Figure 1D with the emission spectrum of the phosphor mixture of Figure 1C;
Figure 1G shows the convolution of the reflectivity spectrum of the beamsplitter of Figure 1E with the emission spectrum of the phosphor mixture of Figure 1C;
Figure 2 shows a stylized sectional view of a generalized apparatus of the present invention having a plurality of photodetector assemblies;
Figure 3 shows a stylized sectional view of a particular implementation of the present invention having three photodetector assemblies;

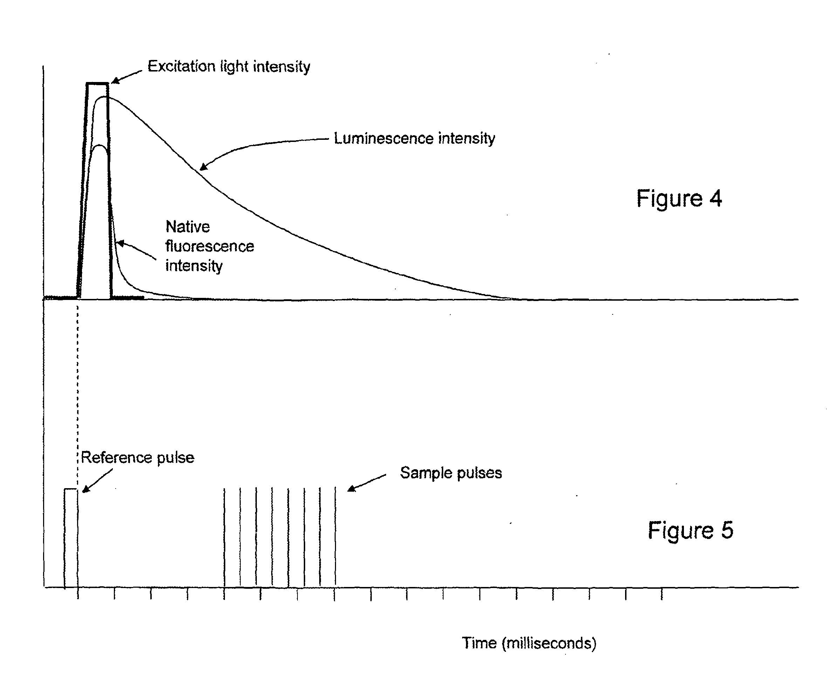

Figure 4 shows a timing plot of the excitation pulse and the luminescence characteristic time response of the security mark along with the characteristic time response of the fluorescence of a typical substrate material on which the mark is applied;
Figure 5 shows a timing plot of the sampling intervals over which photodetector samples are collected during the luminescence response after the decay of the inherent fluorescence;

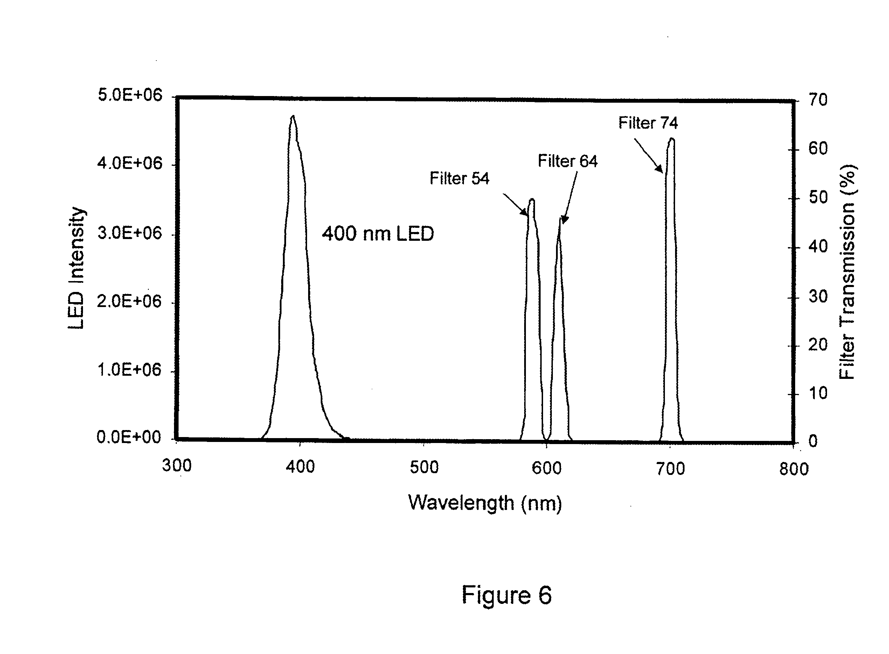

Figure 6 shows the emission spectrum for an LED illumination source and the transmittance characteristics of three band-pass filters useful in the implementation of Figures 2 and 3;
Figure 7 shows a transconductance amplifier used as a preamplifier for the photodetectors;
Figure 8 shows a block diagram of the signal processor assembly;
Figure 9 shows a block diagram of the operation of the signal processor;
Figure 10 shows the emission spectrum for a typical LED illumination source;
Figure 11 shows the transmittance characteristics of two optical filters, one filter (24) useful for suppressing longer wavelength emission from the LED source of Figure 10 and one filter (34) useful for preventing scattered light of the primary excitation wavelength from reaching the photodetector assemblies;
Figure 12 shows a plot of the detected signal level versus excitation source pulse repetition frequency for a synchronous detection example.
Figure 13 shows the combined substrate fluorescence and luminescence in response to continuous source of excitation of the phosphor of Example 4;
Figure 14 shows the luminescence response of the security mark applied to a label of Example 4 in response to a pulsed source of excitation;
Figure 15 shows the combined substrate fluorescence and luminescence in response to continuous source of excitation of the security mark applied to a label of Example 5 in response to continuous source of excitation;
Figure 16 shows the luminescence response of the security mark applied to a label of Example 5 in response to a pulsed source of excitation;
Figure 17 shows the reflectivity spectrum of a 589 nanometer notch filter of Example 10 and Example 11;
Figure 18 shows the reflectivity spectrum of a 627 nanometer notch filter of Example 10 and Example 11;
Figure 19 shows the reflectivity spectrum of a 694 nanometer notch filter of Example 10 and Example 11;
Figure 20 A-C shows the spectrum expected at each photodetector as a result of the convolution of the notch filter spectra of Figures 17-19 with the luminescence spectrum of Example 10;
Figure 21A-C shows the spectrum expected at each photodetector as a result of the convolution of the notch filter spectra of Figures 17-19 with the luminescence spectrum of Example 11;
Figure 22 shows the reflectivity spectrum of a 592 nanometer Rugate filter of Example 12 and Example 13;
Figure 23 shows the reflectivity spectrum of a 610 nanometer Rugate filter of Example 12 and Example 13;
Figure 24 shows the reflectivity spectrum of a 694 nanometer Rugate filter of Example 12 and Example 13;
Figure 25 shows the luminescence response in response to a pulsed source of excitation of the phosphor of Example 12;

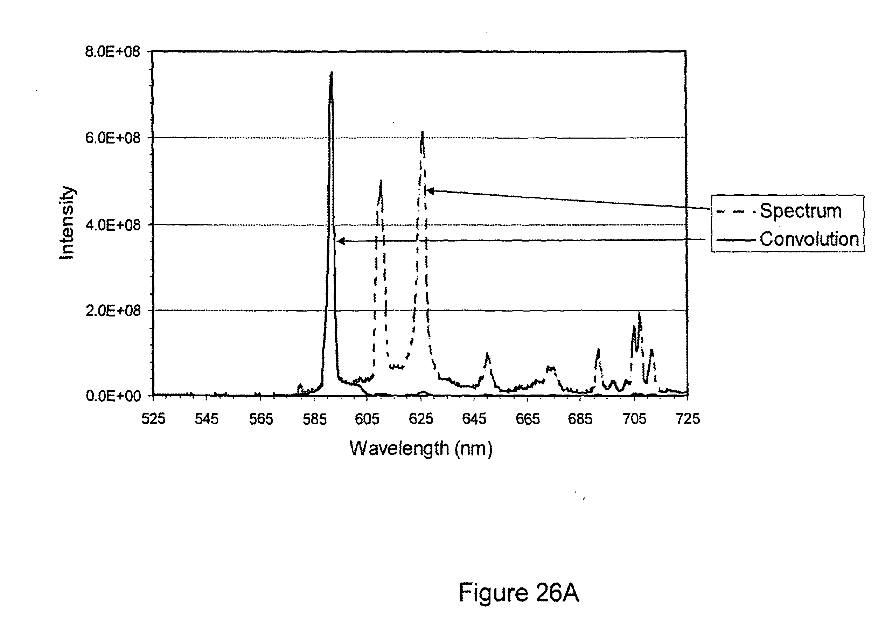

Figure 26A shows the expected spectrum as a result of the convolution of the 592 nanometer Rugate filter spectra with the luminescence spectrum of Example 12;

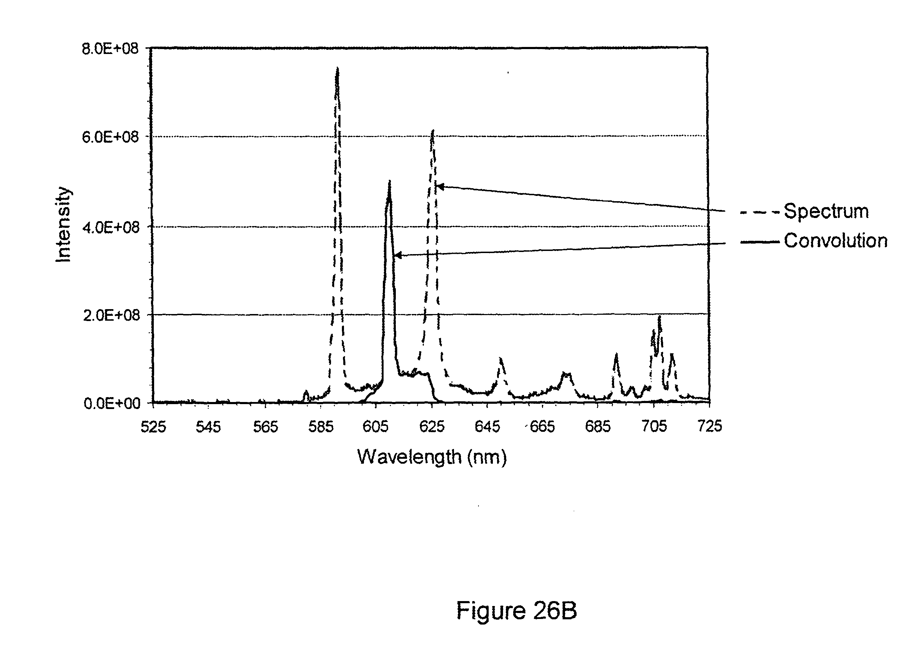

Figure 26B shows the expected spectrum as a result of the convolution of the 610 nanometer Rugate filter spectra with the luminescence spectrum of Example 12;

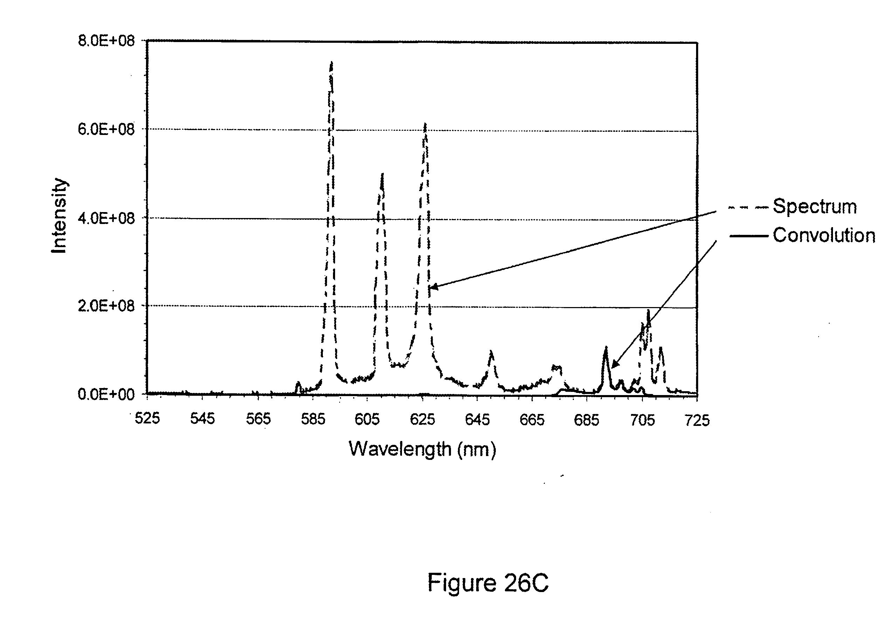

Figure 26C shows the expected spectrum as a result of the convolution of the 694 nanometer Rugate filter spectra with the luminescence spectrum of Example 12;

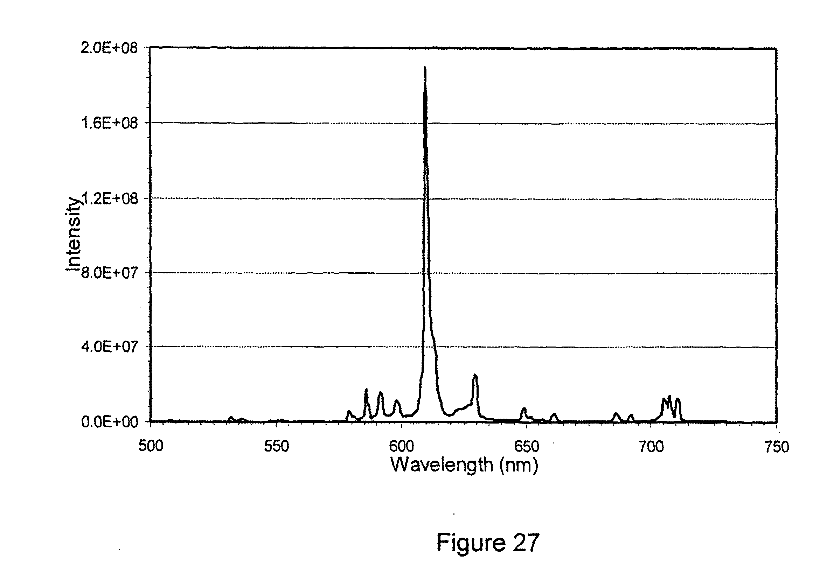

Figure 27 shows the luminescence response in response to a pulsed source of excitation of the phosphor of Example 13;
Figure 28A shows the expected spectrum as a result of the convolution of the 592 nanometer Rugate filter spectra with the luminescence spectrum of Example 13;
Figure 28B shows the expected spectrum as a result of the convolution of the 610 nanometer Rugate filter spectra with the luminescence spectrum of Example 13;
Figure 28C shows the expected spectrum as a result of the convolution of the 694 nanometer Rugate filter spectra with the luminescence spectrum of Example 13;

### DETAILED DESCRIPTION OF THE INVENTION

Throughout the following detailed description similar reference characters refer to similar elements in all figures of the drawings. Although the present apparatus is described in the context of utilizing a blue or near ultraviolet excitation source and detecting longer wavelength visible luminescence (i.e., a so-called down-conversion mode), it should be appreciated the principles described apply equally to other excitation wavelengths and to other luminescence wavelengths. Luminescent materials emitting at shorter wavelengths than the excitation source are also contemplated as being within the scope of application of the present apparatus. In such an instance the apparatus of the present invention could be operated in an upconversion mode by (for example) replacing the 400 nanometer LED excitation source with a near infrared emitting LED or laser LED, and using filters appropriate for the upconverted wavelengths from the security mark. Typical upconverting phosphors could be used, for example Y₂O₂S:Yb, Er, in which case the band-pass filters (or notch filters) would be selected to pass (or reflect) the luminescence wavelengths associated with Er, and the excitation of 980 nanometers would stimulate the upconversion process via excitation of Yb ions followed by energy transfer to Er. The excitation source would still be modulated (as for down conversion) at a frequency consistent with the Er luminescence lifetime.
An example of an emission spectrum of a commercially available luminescent material is shown in Figure 1A. As will be described, the apparatus of the present invention may be used to verify the presence of this material in a luminescent security mark. For example, in a phosphor emission spectrum such as shown in Figure 1A having expected peaks at 592, 610.5 and 692 nanometers among others, narrow band-pass filters may be used to detect light in the 585-595, the 605-615, and the 685-695 nanometer wavelength ranges. Additionally, for this spectrum, a relatively wide band-pass filter might pass light between 620 and 680 nanometers to verify the absence of appreciable light energy in this wavelength range.
An additional narrow pass band filter could be centered at 600 nanometers and pass light in between 595 and 605 nanometers to verify the absence of appreciable light energy in the wavelength range between the 592 and 610.5 nanometer peaks.

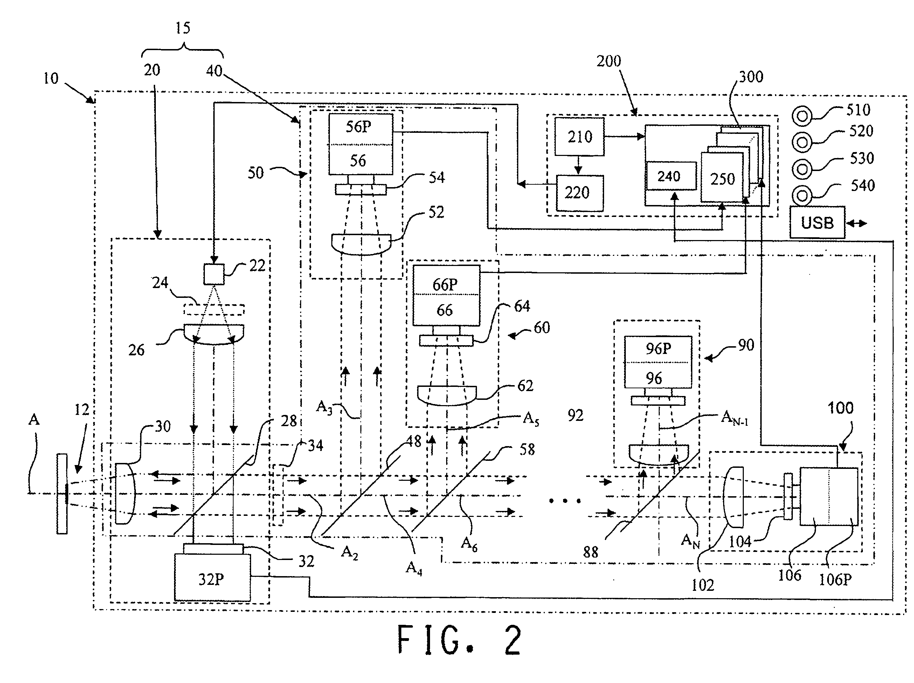

Figure 2 is a stylized plan view in section of an apparatus 10 for reading a security mark 12. It may be appreciated from Figure 2 that the apparatus 10 of the present invention is modular in its construction. The apparatus 10 comprises an optical arrangement 15 and a signal processor assembly 200.

The optical arrangement 15 is comprised of an illumination assembly 20 and a luminescence detector unit 40. The luminescence detector unit 40 may comprise a plurality of photodetector assemblies 50, 60, ... , 90. The number of photodetector assemblies is chosen according to the number of wavelength bands of emission from the luminescent material.

The illumination assembly 20 is comprised of a light source 22, energized by an associated driver circuit 220, a band-pass filter 24, a collimating lens 26, a wavelength-selective beam splitter 28 and a focusing lens 30. The light source 22 is typically a light emitting diode (LED) operating in the blue or near ultraviolet portion of the light spectrum and is chosen in accordance with the absorption spectrum of the luminescent material to be illuminated. Other possible light sources include laser LEDs, tungsten lamps, quartz halogen lamps, mercury (Hg) lamps, xenon (Xe) lamps, and solid state lasers.

The filter 24 is employed to limit the range of wavelengths of the excitation illumination. If the emission of the light source 22 is sufficiently narrow, filter 24 may be omitted. The response of the filter 24 is selected to match a known absorption band of the luminescent material in the security mark. The filter 24 might typically be a narrow band-pass filter, but filters having other response functions might be employed.

Light from the LED 22 that has passed through the filter 24 is collected by the collimating lens 26 that substantially collimates the light beam. An SF-5 antireflective coated plano-convex *f*1 lens (available as Edmund Optics part number P45-504) has been found suitable as lens 26. The substantially collimated light is directed to the wavelength-selective beam splitter 28 that reflects the illumination beam along an optical axis A (the axis segment A₁). The beam splitter 28 is typically a wavelength-specific beam splitter that reflects most of the blue light from the LED 22 that has passed through filter 24 and transmits a small amount of the blue light and most of the other longer wavelengths, such as green or red light. The light reflected by beam splitter 28 is directed along the primary axis segment A₁ to the focusing lens 30 that focuses the illumination beam on the security mark 12. The focusing lens 30 is typically an f/1 plano-convex lens (such as Edmund Optics part number P45-504). The light emitted by the security mark 12 is primarily luminescence from luminescent materials within the security mark 12 and has a wavelength spectrum different from that of the excitation illumination beam.

This light emitted by the security mark 12 is collected and substantially collimated by the lens 30, and directed back along the optical axis segment A₁ in a substantially collimated manner. This substantially collimated light passes through the wavelength-specific beam splitter 28 and along the primary axis (the segment A₂) to a series of photodetector assemblies 50, 60, ... ,90. An optional filter 34 may be used to block stray light from reaching the photodetector assemblies.

Each photodetector assembly comprises an optical divider (48, 58, . .., 88 respectively) positioned along the primary axis A, a lens (52, 62, .. ., 92 respectively), a narrow band-pass filter (54, 64, ... , 94 respectively), and a photodetector (46, 56, ... , 96 respectively) positioned along secondary axes A₃, A₅, .. , A_{N-1}, respectively. A photodetector assembly 100, comprising a lens 102, a narrow band-pass filter 104 and a photodetector 106 is positioned along axis segment AN.

The optical divider may be implemented in one of several forms: as a non-wavelength-selective beam splitter, as a wavelength-selective beam splitter, or as a special form of wavelength-selective beam splitter known as a notch or Rugate filter. A description of notch and Rugate filters, is found in Thin-Film Optical Filters by H. A. Macleod, Institute of Physics Publishing, Philadelphia, third edition (2001). The following discussion assumes the optical divider is implemented as a non-wavelength-selective beam splitter.

The photodetectors 56, 66, 76, ... , 106 may be silicon photodiodes, avalanche silicon photodiodes, photomultipliers, or charge-coupled devices (CCDs), although silicon photodiodes, such as a model UDT-555D available from UDT Sensors, Inc., Hawthorne, CA or a model S1337-66BR Si Photodiode Detector - 5.8mm, from Hamamatsu Corporation, Bridgewater, NJ are preferred.

The optical divider 48 of photodetector assembly 50 causes a first portion (typically about 20 - 30%) of the incident light to be reflected along a secondary axis segment A₃, while a second portion (typically about 70 - 80%) passes through the optical divider 48 and travels along primary axis segment A₄. Light directed along the secondary axis segment A₃ is focused by a lens 52, passes through a band-pass filter 54, and is detected by a photodetector 56. The photodetector 56 and associated preamplifier 56P creates an electrical signal representation of the light intensity incident on photodetector 56 which is transmitted to the signal processing assembly 250. A first so-called wavelength band of interest of the luminescence emission is thus detected by photodetector assembly 50.

Light traveling along primary axis segment A₄ is directed to a photodetector assembly 60. The optical divider 58 of photodetector assembly 60 reflects a portion of the incident light (typically about 30 - 50%) along a secondary axis segment A₅ and transmits the remaining portion along primary axis segment A₆. Light directed along the secondary axis segment A₅ is focused by a lens 62, passes through a band-pass filter 64, and is detected by a photodetector 66. The photodetector 66 and associated preamplifier 66P creates an electrical signal representation of the light intensity incident on photodetector 66 which is transmitted to the signal processing assembly 260. The photodetector 66 is also typically a model UDT-555D silicon photodiode as described above. A second wavelength band of interest of the luminescence emission is thus detected by photodetector assembly 60.

Light traveling along primary axis segments A₆ , ... , A_{N} is detected by subsequent photodetector assemblies 70, ..., 100. Each subsequent photodetector assembly 70, ..., 100 is similar to the previously described photodetector assemblies 50, 60. The reflectivities of each optical divider 48, 58, ..., 88 is selected in accordance with the total number of photodetector assemblies 50, 60, ..., 100 employed in the apparatus. It may be appreciated that the optical divider 48, 58, ..., 88 divide the luminescence emanating from security mark approximately equally and direct the luminescence light to the photodetector assemblies 50, 60, ..., 100 at approximately equal intensities.

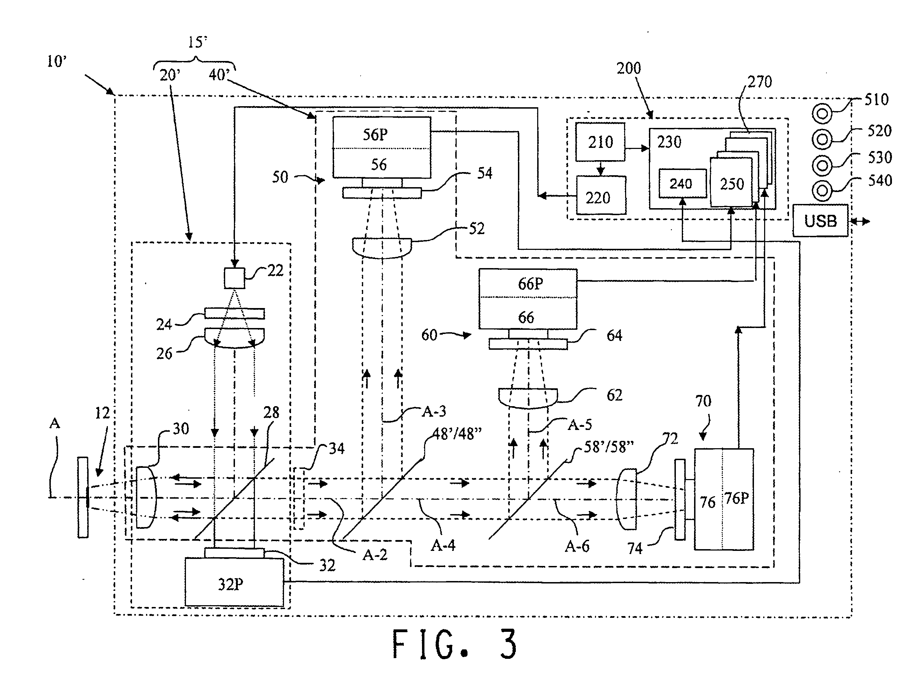

Figure 3 is a stylized plan view in section of a specific implementation of the present invention showing an apparatus 10'. The apparatus 10' comprises an optical arrangement 15' and a signal processor assembly 200. The optical arrangement 15' is comprised of an illumination assembly 20' and a photodetector assembly 40'. The photodetector assembly 40' is comprised of three photodetector assemblies 50', 60', 70'. The illumination assembly 20' is arranged as previously described in conjunction with the illumination assembly 20 of Figure 2.

The light emitted by the security mark 12 is collected and substantially collimated by the lens 30, and directed back along the primary optical axis segment A₁ in a substantially collimated manner. This substantially collimated luminescence passes through the wavelength-specific beam splitter 28, through the optional filter 34 and along the primary axis (the segment A₂) to a series of photodetector assemblies 50', 60', 70'. Each photodetector assembly 50', 60' comprises an optical divider (48' or 48", 58' or 58" respectively), each positioned along the primary axis A, a lens (52', 62' respectively), a narrow band-pass filter (54', 64' respectively), and a photodetector (46', 56' respectively) positioned along secondary axes A₃, A₅ respectively. A photodetector assembly 70', comprising a lens 72', a narrow band-pass filter 74' and a photodetector 66 is positioned along primary axis segment A₆.

The (non wavelength-selective) optical divider 48' causes a first portion (typically about 30%) of the incident light to be reflected along a secondary axis segment A₃, while a second portion (typically about 70%) passes through the beam splitter 48' and travels along primary axis segment A₄. Light directed along secondary axis segment A₃ is focused by a lens 52, passes through a band-pass filter 54, and is detected by a photodetector 56. The photodetector 56 and associated preamplifier 56P creates an electrical signal representation of the light intensity incident on photodetector 56 which is transmitted to the signal processing assembly 250. Light traveling along primary axis segment A₄ is directed to an optical divider 58'. The optical divider 58' reflects a portion of the incident light (typically about 50%) along axis segment A₅ and transmits the remaining portion along primary axis segment A₆. Light directed along secondary axis segment A₅ is focused by a lens 62, passes through a band-pass filter 64, and is detected by a photodetector 66. The photodetector 66 and associated preamplifier 66P creates an electrical signal representation of the light intensity incident on photodetector 66 which is transmitted to the signal processing assembly 250.

Light traveling along primary axis segment A₆ is detected by subsequent photodetector assembly 70, comprising a lens 72, a band-pass filter 74 and a photodetector 76 and associated preamplifier 76P. The reflectivities of each beamsplitter 48', 58' is selected to divide the luminescence emanating from security mark 12 approximately equally and to direct the luminescence light to the photodetector assemblies 50, 60, 70 at approximately equal intensities.

If expected luminescence wavelength bands are closely spaced, as is the case for some luminescent materials having luminescence peaks spaced only 20-30 nanometers apart, the optical dividers 48 and 58 are typically chosen to be non wavelength-selective optical dividers (e.g., broadband beam splitters) that partially reflect and partially transmit light substantially equally at all wavelengths. The narrow band-pass filters 54, 64 then permit only the expected narrow wavelength bands of luminescence to reach the respective photodetector assemblies 50 and 60. If these expected wavelength bands are sufficiently separated in wavelength, such as might be expected if the security marks contain two different rare earth ions, such as europium (Eu) and terbium (Tb), then wavelength-selective beam splitters 48" and 58" might be employed (in place of beam splitters 48' and 58', which are not wavelength-selective) without the need for the narrow band-pass filters 54, 64. The use of wavelength-selective beam splitters has the potential to increase the optical intensities at the respective photodetector assemblies 50, 60 and 70 by several-fold.

It should be noted that it is important that the transmission characteristics of the band-pass filters closely match the spectral peak (i.e., the wavelength bands of interest) to be detected or match the wavelength range where the absence of light energy is expected.

### Example 1 Luminescent material having a spectrum with 3 peaks (Figure 1 A).

An apparatus 10 having an arrangement in accordance with Figure 2, having four photodetector assemblies might be used to determine the authenticity of an item bearing a luminescent security mark with an emission spectrum like that shown in Figure 1A. In such an apparatus, the band-pass filter 54 of photodetector assembly 50 is centered at 589 nanometers and has a full-width at half-maximum (FWHM) transmission of 10 nanometer so that it passes the wavelength band 584-594 nanometers, the band-pass filter 64 of photodetector assembly 60 passes the wavelength band 605-615 nanometers and the band-pass filter 74 of photodetector assembly 70 passes the wavelength band 689-699 nanometers. Additionally, for this spectrum, a photodetector assembly 80 having a band-pass filter 88 might pass light between 540 and 570 nanometers to verify the absence of appreciable light energy in this wavelength range.

### Example 2 Security marks with two luminescent materials demonstrating the use of wavelength-specific beamsplitters (48, 58) to separate Eu³⁺ and Tb³⁺ luminescence.

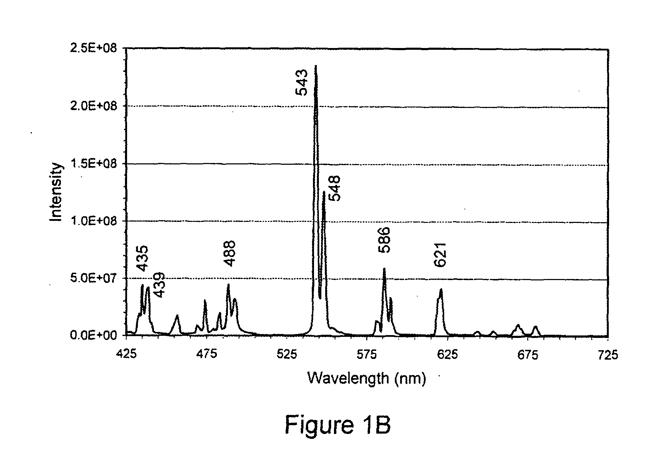

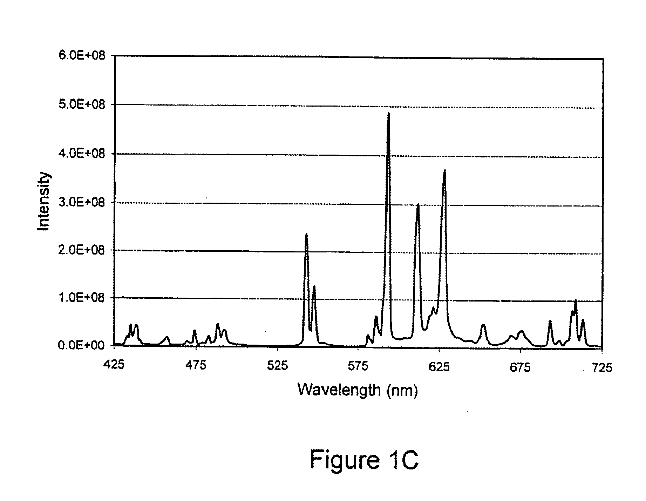

A series of "Tb³⁺ + Eu³⁺" luminescence spectra were "synthesized" by mathematically adding a first spectrum (Figure 1A) of Kasei Optonix (Y,Gd)BO₃:Eu (sold as KX-504A) excited with 394 nanometer light and a second spectrum (Figure 1 B) of GTE Sylvania Gd₂O₂S:Tb (Type 2611) excited with 377 nanometer light, each spectrum multiplied by a variable factor to simulate different mixing ratios (as specified in the second and third columns of Table 1 below). The two starting spectra were measured using a SPEX^{®} Fluorolog-3^{®} spectrometer with excitation and emission resolution set to 1 nanometer. The resulting synthesized luminescence spectra of this hypothetical mixture (as shown in Figure 1C) were convolved with the reflectivity spectral responses of two filters selected to separate the green Tb emission from the red Eu emission. The green filter was an Edmund Optics G47-265 and the red filter an Edmund Optics G47-266

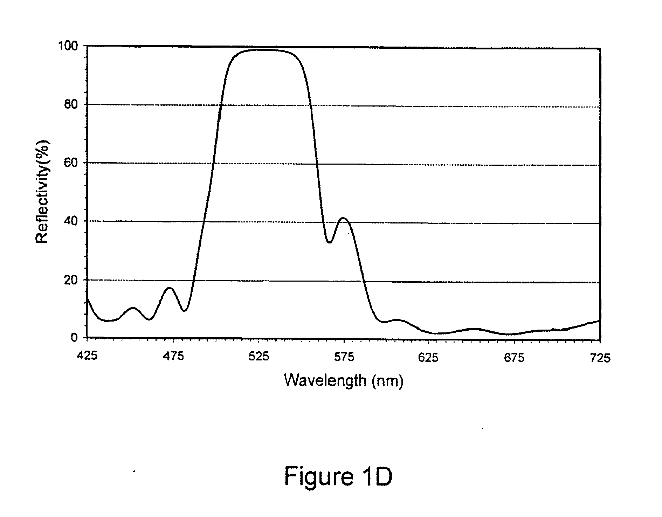

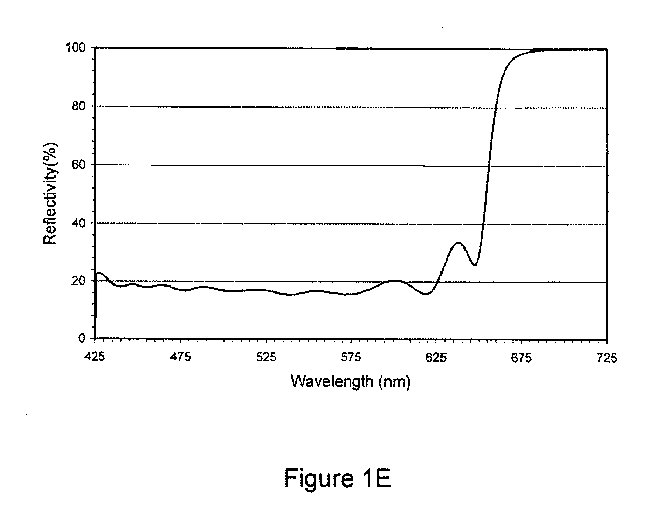

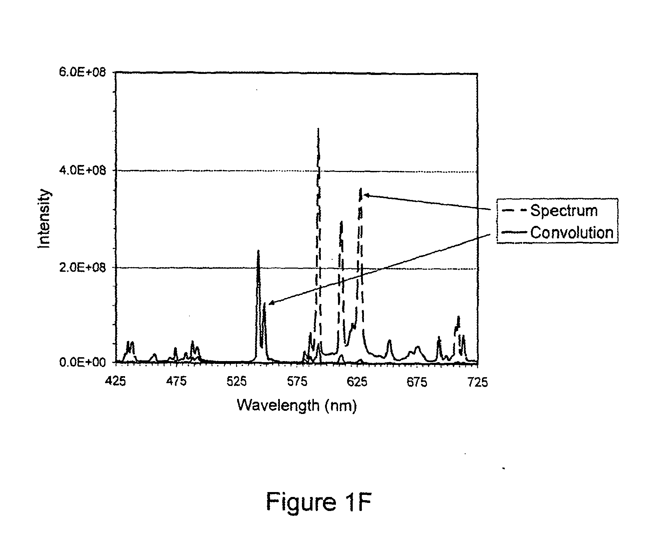

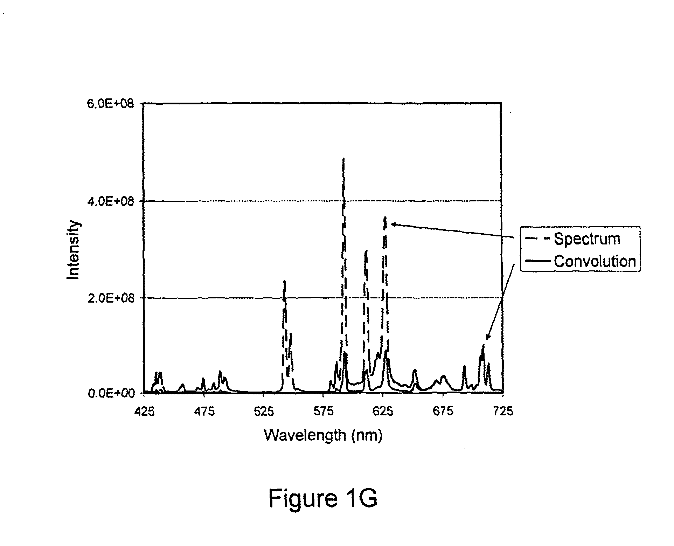

The filter transmission spectra were measured at a 45 degree angle of incidence using a Perkin-Elmer Lambda 9000 UV-visible-near infrared spectrometer with 1 nanometer resolution and 1 nanometer step sizes and the reflectivity spectrum was calculated using the equation :R (reflectivity) = 1 - T (transmission) (i.e. assuming no absorption is present). The filter reflectivity spectra of the "green" and "red" filters are respectively shown in Figures 1D and 1E. Two exemplary spectral convolutions appear in Figures 1F and 1G. The ratios of the intensities that would be measured by photodetectors 56 and 66 if the green filter (having spectrum 1D) was in position 48 and the red filter (having spectrum 1E) in position 58 (as shown in the stylized sectional view of Figure 2) are listed in Table 1 for seven different hypothetical mixtures of the phosphors.

**Table 1. Calculated detected light intensity ratios for synthesized spectra representing different Tb:Eu mixtures.**

| Synthesized spectrum number | Gd₂O₂S:Tb multiplier (Type 2611) | (Y,Gd)BO₃:Eu multiplier (KX-504A) | I(green)/I(red) |
|---|---|---|---|
| 1 | 1.00 | 1.00 | 0.636 |
| 2 | 0.75 | 1.00 | 0.537 |
| 3 | 0.50 | 1.00 | 0.430 |
| 4 | 0.25 | 1.00 | 0.317 |
| 5 | 1.00 | 0.75 | 0.761 |
| 6 | 1.00 | 0.50 | 0.982 |
| 7 | 1.00 | 0.25 | 1.485 |

An apparatus in accordance with Figure 3 having three photodetector assemblies may be used to determine the authenticity of an item bearing a luminescent security mark containing two different rare earth ions having widely spaced emission peaks, such as Eu and Tb. In such a situation wavelength-selective beamsplitters 48" and 58" may be used. A beam splitter 48" that has high reflectivity (>90%) for the first emission peak (e.g., Tb luminescence lines at 543 and 548 nanometers) can be employed in photodetector assembly 50. A notch filter or Rugate filter may be used for the wavelength-selective beam splitter 48". A second beam splitter 58" that has high reflectivity for the second emission peak (e.g., Eu luminescence line at 692 nanometers) but transmits the shorter wavelength Eu luminescence lines at 592 nanometers and 610.5 nanometers, could be used in photodetector assembly 60. A notch filter or Rugate filter may be used for the wavelength-selective beam splitter 58". Such wavelength-selective beamsplitters provide significantly higher optical intensities at all three photodetector assemblies 50, 60, 70 respectively. For this example photodetector assembly 50 employs a 530-550 nanometer band-pass filter to detect the 543 and 548 nanometer peaks, photodetector assembly 60 employs a 685-705 nanometer band-pass filter to detect the 692 nanometer peak, and photodetector assembly 70 employs a 580-620 nanometer band-pass filter to detect the combined 592 nanometer and 610.5 nanometer peaks.

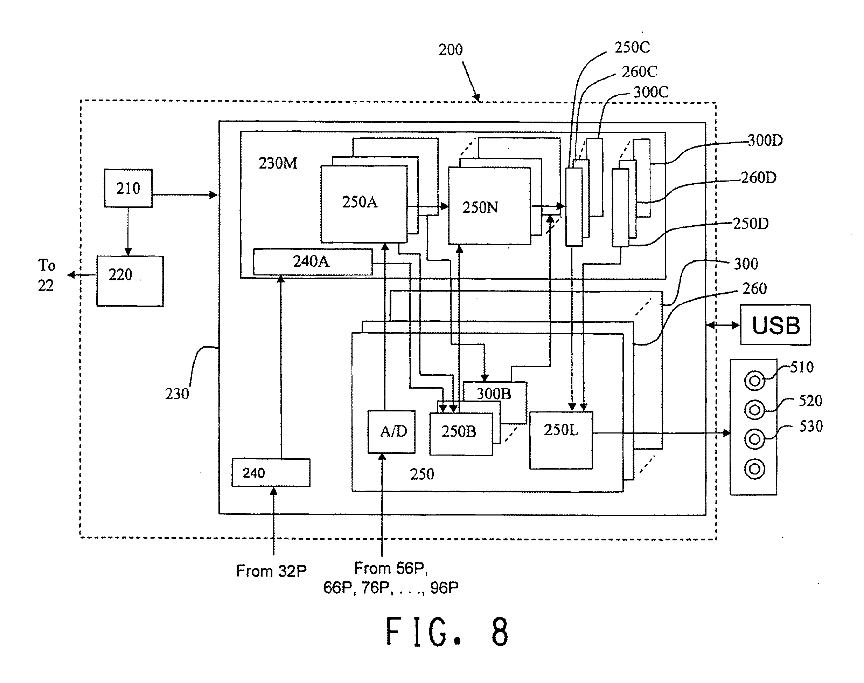

As seen in Figures 2 and 3 and as may better be seen in Figure 8, the signal processor assembly 200 of the present apparatus 10 comprises a timing and control unit 210, a driver unit 220 and a signal processor assembly 230. The signal processor 230 is synchronized by the timing unit 210 and comprises processor channels 240, 250, 260, ... , 290, 300. The processor channel 240 is associated with the light source monitoring photodetector 32. The processor channels 250, 260, ... , 290, 300 each receive a signal from the preamplifier (56P, 66P, ... , 96P, 106P) associated with photodetectors 56, 66, ..., 96, 106 respectively. Each processor channel comprises an analog to digital converter (A/D) interfaced to the output of each preamplifier. The A/D converter samples the photodetector output signal and converts the analog voltage to a digitized signal. Each digitized sample is stored in a memory 230M which may be read by the digital signal processor unit 230C.

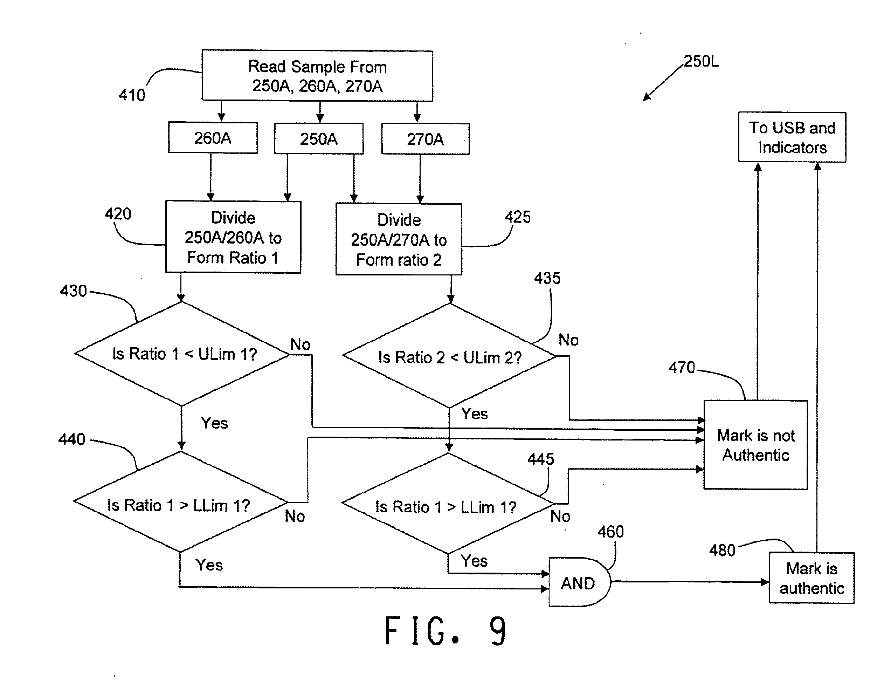

In operation, the timing and control unit 210 generates a timing reference signal that is transmitted to the driver unit 220 and to the signal processor assembly 230. The driver unit 220 generates a series of pulses each having a predetermined time duration and each spaced at predetermined time intervals to drive the light source 22. The predetermined time duration is selected in accordance with the luminescence characteristics of the luminescent material, e.g., excitation time to reach full luminescence. The predetermined time interval between pulses is selected in accordance with the luminescence decay characteristics of the luminescent material, e.g., the time for luminescence to decay to a negligible level. For each pulse of light from source 22 the signal processor channel 240 samples the signal from the monitoring photodetector 32, its associated A/D converter converts the signal to a digital value and the value is stored in an row array 240A in memory 230M. Thus each value stored in array 240A represents the light intensity for a specific pulse of light from the light source. This value may optionally be used later to normalize the detected signals from the photodetector assemblies 50, 60, ..., 90, 100.
After a predetermined time delay (sufficiently long to allow fluorescence of the substrate to decay to negligible levels) each signal processing channel 250, 260, ... , 290, 300 starts sampling the output of its respective photodetector. A plurality of samples are converted to digital values by the respective A/D converters and the values are stored in the memory 230M. The values are stored in memory arrays 250A, 260A, ... , 290A, 300A, each array corresponding to each processor channel 250, 260, ... , 290, 300. Each column of an array represents the luminescence response of a photodetector to a single excitation pulse and each row of that array represents a sample at a predetermined time after the timing pulse. A separate array is stored for each channel of the signal processor. Thus in array 250A, column 1 represents the response to the first light pulse, column 2 represents the response to the second light pulse, ... , and column M represents the response to the Mth light pulse.
The response signals in arrays 250A, 260A, 270A, ... , 290A, 300A may be optionally normalized (blocks 250B, 260B, ... , 300B) to correct for any variation in light intensity between light pulses. This is accomplished by dividing the values in each column of arrays 250A, 260A, 270A, ... , 290A, 300A by the corresponding value in row array 240A corresponding to that light pulse. These normalized values are stored in arrays 250N, 260N, 270N, ... , 290N, 300N. The values in each row of arrays 250A, 260A, 270A, ... , 290A, 300A (or optionally, the values in each row of arrays of normalized values 250N, 260N, 270N, ... , 290N, 300N) are then averaged to produce a single column array (250C, 260C, 270C,..., 290C, 300C respectively) that represents the respective response from each photodetector 56, 66, 76, ..., 106 over the time interval sampled. Since the values in each single column array (250C, 260C, 270C, ... , 290C, 300C respectively) have been averaged over a number of pulses M, luminescence response of the material of the security mark to excitation by stray ambient light is effectively removed. The values at the corresponding row positions of the column arrays 250C, 260C, 270C, ... , 290C, 300C may then be ratioed (block 250L) to determine the relative response at each band of wavelengths of interest.
Optionally all the values in each array 250C, 260C, 270C,... , 290C, 300C may be averaged to produce a single value 250D, 260D, 270D, ... , 290D, 300D, respectively, that represents the average response over all the samples for each wavelength of interest. These single values may then be ratioed to determine the relative response at each band of wavelengths of interest.
The ratios may be formed in one of several ways. Preferably, as is generally indicated by reference numeral 250L in Figure 9, the values representing the averaged luminescence intensities at the first, second and third wavelength ranges are read (block 410). Each value representing the averaged luminescence intensity at a first wavelength range (in array 250C) may be divided by the corresponding value representing the averaged luminescence intensity at a second wavelength range (e.g., the value in array 260C) (block 420). Similarly each value representing the averaged luminescence intensity at the first wavelength range (in array 250C) may be divided by the corresponding value representing the averaged luminescence intensity at a third wavelength range (e.g., the value in array 270C) (block 425). Each of these ratios is then compared to an upper limit ULim1, ULim2 respectively (decision blocks 430, 435). If the luminescence intensity ratio exceeds these limits the security mark is declared "not authentic" (block 470). If the ratios are both less than the upper limits ULim1, ULim2, they are then each compared to lower limits LLim1, LLim2 respectively (decision blocks 440, 445). If either ratio is less than the corresponding lower limits LLim1, LLim2, the security mark is declared "not authentic" (block 470). Only if both ratios are greater than the lower limits LLim1, LLim2 (logical AND of block 460) is the security mark declared "authentic" (block 480). The result of the authentication, either "authentic" or "not authentic" is then transmitted to the indicators and made available to the USB port, if the unit is connected to a remote data logging device. It should be appreciated that luminescence values at additional wavelength ranges may be included in the authentication determination if a higher level of security is desired.
In an alternative ratioing method (not shown), a value representing the averaged luminescence intensity at each wavelength range may be divided by a value representing the sum of the averaged luminescence intensities at all of the detected wavelength ranges and then these ratios compared to respective upper and lower limits.

The signal processor assembly 200 is implemented using commercially available logic and digital signal processor integrated circuit units. These integrated circuits are small and inexpensive and have low enough power consumption to implement the required functionality in a hand-held reader that may be battery powered.

### Authentication Example

An apparatus 10 having an arrangement in accordance with Figure 2, having four photodetector assemblies might be used to determine the authenticity of an item bearing a luminescent security mark with an emission spectrum like that shown in Figure 1A. In such an apparatus, the band-pass filter 54 of photodetector assembly 50 passes the wavelength band 585-595 nanometers, the band-pass filter 64 of photodetector assembly 60 passes the wavelength band 605-615 nanometers and the band-pass filter 74 of photodetector assembly 70 passes the wavelength band 685-695 nanometers. Additionally, for this spectrum, a photodetector assembly 80 having a band-pass filter 88 might pass light between 520 and 570 nanometers to verify the absence of appreciable light energy in this wavelength range.

Thus channel 250 (and the resulting array 250C) represents the response at the 592 nanometer peak, channel 260 (and the resulting array 260C) represents the response at the 610.5 nanometer peak and 270 (and the resulting array 270C) represents the response at the 692 nanometer peak of the emission spectrum.
The ratios of the corresponding values of respective pairs of arrays 250C and 260C, arrays 250C and 270C and arrays 260C and 270C stored in the memory 230M of the signal processor 230 are compared to predetermined ranges of expected ratios for the wavelength bands of interest. In this example the ratio of the 585-595 nanometer wavelength band (i.e., the 592 nanometer peak) to the 605-615 nanometer wavelength band (i.e., the 610.5 nanometer peak) may be compared to the expected ratios for this material. Similarly the ratio of the 585-595 nanometer wavelength band (i.e., the 592 nanometer peak) to the 685-695 nanometer wavelength band (i.e., the 692 nanometer peak) may be compared to the expected ratio for this material. If all the ratios satisfy the criteria of expected ratios the authenticity of the luminescent security mark is confirmed and an indicating device 510 (e.g., a liquid crystal display (LCD), a green indicator light, high frequency tone audible alert, etc.) is activated to indicate the authenticity of the security mark.
If one or more ratios are outside the criteria of expected ratios another indicating device 520 (e.g., an LCD, a red indicator light, low frequency audible alert, etc.) is activated to indicate the lack of authenticity of the security mark. The signal processor also compares overall signal levels stored in memory with criteria for expected signal levels. If the signal level from the monitoring photodetector 32 is too low, this is an indication that the light source 22 is not operating properly and an appropriate indicating device 530 (e.g., an LCD, a flashing red indicator light, audible alert, etc.) is activated. If the signal levels from the photodetector assemblies are too low, this is an indication that the apparatus may not be illuminating the security mark and an appropriate indicating device 540 (e.g., an LCD, a blinking yellow indicator light, beeping audible alert, etc.) is activated.

### Luminescence Lifetimes

Important considerations in an apparatus for verifying security marks are the excitation response time of the luminescent material, i.e., the time required for the excitation illumination to produce a useful level of luminescence, and the luminescence lifetime, i.e., the time required for the luminescence intensity to decay to 1/e of its initial intensity (that is, its intensity immediately after the excitation pulse is complete). Additional considerations are the excitation response time and the fluorescence lifetime (i.e., the time required for the fluorescence to decay to its 1/e value) of the fluorescence of the substrate to which the luminescent material is applied. These considerations are especially important if the verification apparatus utilizes a synchronous detection method, which is preferred in the present apparatus for the increased sensitivity it provides.

If the excitation response time and the luminescence lifetime of the luminescent material of the security mark are sufficiently different from the excitation response time and the fluorescence lifetime of the inherent fluorescence of the substrate, these differences can be exploited so that the verification apparatus can effectively ignore the substrate fluorescence.
The excitation response time of the substrate fluorescence is typically significantly less than about ten microseconds and the fluorescence decay time of the substrate fluorescence is typically less than about ten microseconds.
In preferred embodiments of the invention, security mark materials are chosen from among those materials families containing rare earth ions as the luminescent centers. For some of these rare earth ions the luminescent decay times are as much as 30 milliseconds.

For a security mark containing such a rare earth ion on a fluorescing substrate the excitation pulse from the light source 22 might typically be five milliseconds in duration. A 50 microsecond (that is, five times longer than the substrate fluorescence lifetime) delay between the end of the light pulse to the start of sampling of the photodetector signals might be used so that the substrate fluorescence has fully decayed before the sampling begins.

The basic concept of synchronous or lock-in detection in the present apparatus is to take a weak DC luminescence signal from a security mark 12, which is easily contaminated and overwhelmed by ambient noise sources, and convert it to an AC luminescence signal by chopping (pulsing) the excitation source at some frequency. This AC luminescence signal can be detected by a photodiode, the resulting electrical signal band-pass filtered (at the chopping frequency), then amplified and demodulated (i.e., converted back to DC) by a phase sensitive detector that selectively senses a signal only at the chopping frequency. The DC signal is then low-pass filtered and amplified, and this final output is then directly proportional to the light intensity falling on the photodetector. The last low-pass filter is typically chosen to have a frequency bandwidth corresponding to a one second time constant, or 0.125 Hz. This very narrow bandwidth greatly reduces finite-frequency noise at the output of the lock-in amplifier, but passes the desired DC signal. Thus it is possible to detect a signal that is buried in noise by utilizing synchronous detection, and the considerations needed to apply this scheme to luminescent security marks, and expected performance results are described in an example below.

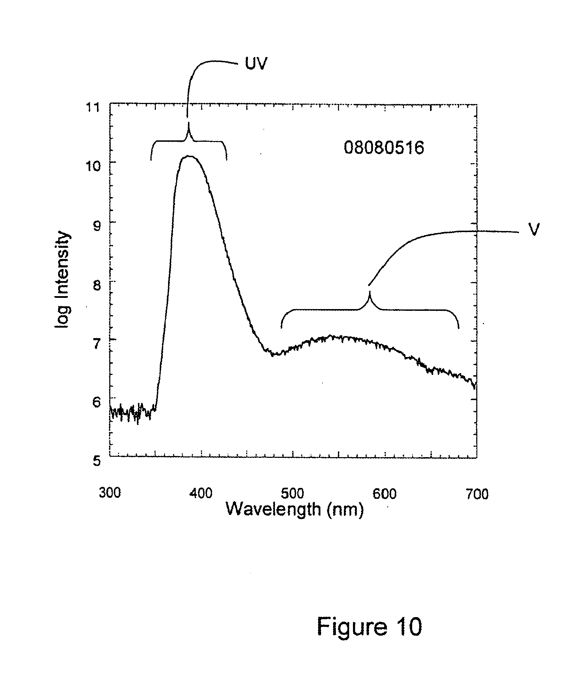

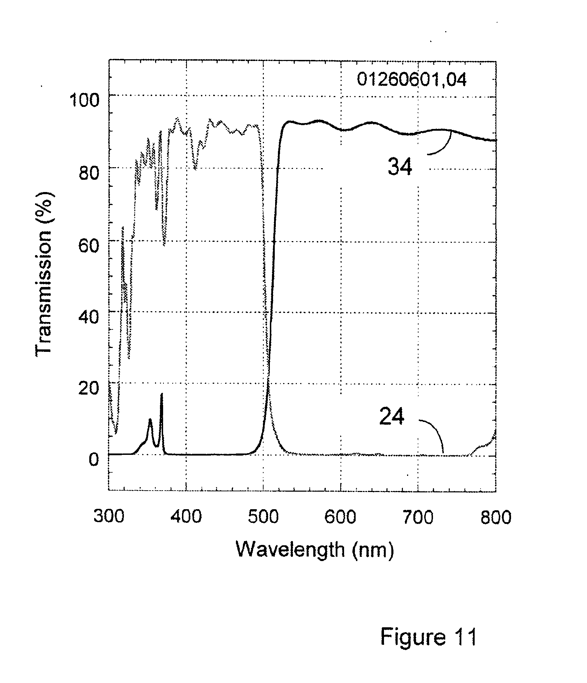

Light emitting diodes having output peaks with wavelengths matching the absorption spectrum of rare earth luminescence materials are available. Typical is a 5 milliwatt (mW) Lumex 380 nanometer LED having a peak emission at 380 nanometers. However, this Lumex LED (and LEDs from other manufacturer's as well) have been found to emit a small amount of visible light V, as shown in the right hand portion of Figure 10, in addition to the desired ultraviolet light UV shown by the peak in the left hand portion of Figure 10. This visible light can be reflected or scattered from the security mark and collected by one or more of the photodetectors, where it appears as a background signal that contaminates the true signal. Figure 11 shows the transmittance characteristic of an optical filter 24 placed between the LED 22 and the collimating lens 26 that eliminates this extraneous light. For example, a filter available from Edmond Optics as part number G52-530 attenuates the visible emission from the LED and substantially eliminates the LED visible emission. Alternatively, a different filter, such as a Schott BG-1 may be used. If desired, a yellow transmitting filter 34, whose transmittance characteristic is also shown in Figure 11, available from Edmond Optics as part number G52-542, can eliminate any stray 380 nanometer LED light that reflects from the security mark from propagating along the primary axis A toward the photodetector assemblies 50, 60, ..., 90.

It should be noted that this reflected light is effectively ignored in the signal processing of the present apparatus because this reflected light will no longer be present when the time-delayed sampling of the photodetectors begins.

### ADVANTAGES OF THE PRESENT INVENTION

The apparatus of the present invention is readily adapted for portable, hand-held use. The housing encloses all of the components of the apparatus, which may be battery powered. The signal processor assembly may be implemented using commercially available low power integrated circuits. The present apparatus may be used as a stand-alone hand-held device or may be operated connected to a data logging system, such as a point-of-sale terminal or a desktop personal computer. The apparatus may be powered by only three AA batteries. Its approximate physical characteristics are: dimensions of less than 8" in length by less than 4" in width by less than 2" in depth; and, a weight is less than 500 grams (with 3 AA batteries). The battery lifetime is estimated to be several hundred hours of continuous use. The apparatus excites a security mark and determines its authenticity in approximately one second. The results of the last several hundred attempts to authenticate a security mark are stored in an on-board memory and may be read out through the USB port on the apparatus.

The optical design of the present apparatus has several advantages over prior art designs for the authentication of luminescent security marks. The present design is a simple retroreflective arrangement that requires minimal optics and is easy to align. A symmetrical arrangement of the photodetector assemblies insures that each of the photodetectors will view the same region of the security mark illuminated. Since each photodetector views the same region of the mark any slight inhomogeneities in the distribution of luminescent material in the security mark will not influence the measured luminescence ratios. A further advantage is achieved by positioning each of the photodetectors at the same distance from the security mark, so that it is not essential that the security mark 12 be exactly at the focal point of lens 30.

If the distance from the collection lens 30 to the security mark 12 is not equal to the focal length of the lens 30, the collected luminescence beam will not be well-collimated and the collected light will not be exactly focused on the active area of each photodetector 56, 66, 76. Positioning each photodetector 56, 66, 76 at an equal distance from the security mark insures an equal degree of focus of the light on each photodetector. This insures that the spatial distribution of light emitted by the security mark arriving at each photodetector 56, 66, and 76 will be the same.

It is also important to focus the luminescence on each detector to a spot size considerably smaller than the detector area to eliminate the possibility of some light missing the detector due to slight misalignments in the optical path.

The folded arrangement of the illumination assembly uses a wavelength-selective beam splitter to direct a substantially collimated excitation beam along an axis toward the security mark. The focusing lens focuses the substantially collimated excitation beam onto the security mark. Light emitted from the security mark travels back along the same axis, is substantially collimated by the focusing lens and passes through the wavelength-selective beam splitter. This folded illumination arrangement reduces the possibility of excitation light from the LED reaching the photodetector assemblies 50, 60, 70, and allows the use of a single lens 30 to both focus the excitation onto the security mark and to collect and substantially collimate the luminescence emitted by the security mark.

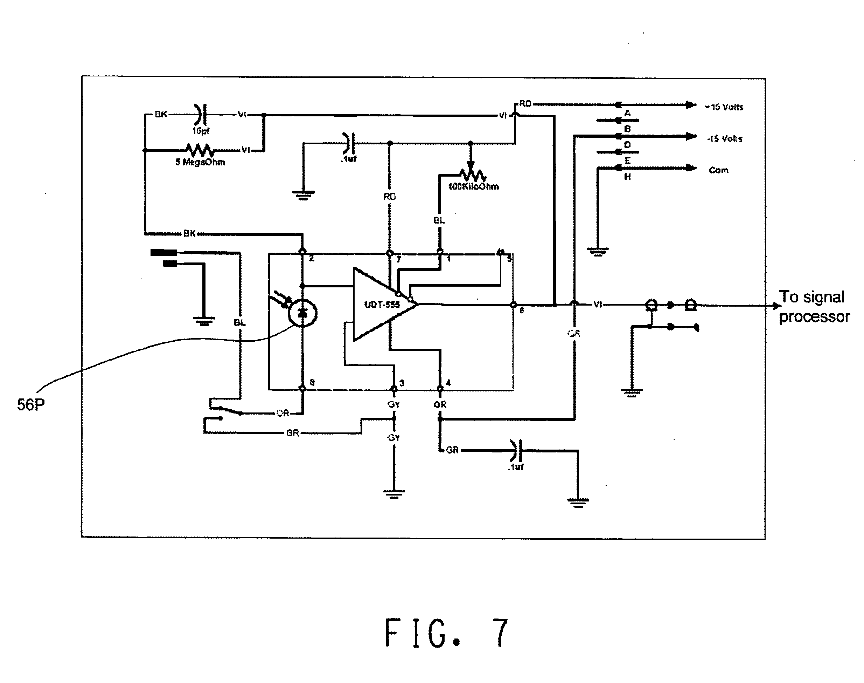

The present apparatus requires photodetectors that are quite sensitive to light, and silicon photodiodes are preferred. Silicon photodiodes have several advantages over other photodetectors. First, silicon photodiodes provide reasonably high sensitivity throughout the visible and near-infrared spectral region (400-1100 nanometers), enabling them to detect most of the luminescence wavelengths of interest. Second, silicon photodiodes can be operated with zero voltage bias, i.e., photovoltaic mode, providing the highest sensitivity at the expense of slightly slower response time, which is not a disadvantage for the present application. This permits simplified electronics and facilitates battery-powered operation. Third, silicon photodiodes are available in various sizes (i.e., detector areas), and in the zero bias, or photovoltaic, mode there is no noise penalty for using larger area photodetectors to simplify optical alignment and minimize the possibility of luminescence falling outside the active area of the photodetector. Fourth, silicon photodiodes are both reliable and inexpensive, two very important attributes for commercial apparatus. Silicon photodiodes require a standard transimpedance preamplifier for current to voltage conversion, and the typical circuit for this amplifier is shown in Figure 7.

For increased optical sensitivity silicon avalanche photodiodes or photomultipliers may be employed as the photodetectors, but these types of detectors require higher voltage power supplies that are not as compatible with battery powered portable operation. In fixed applications, where AC power is available, silicon avalanche photodiodes or photomultipliers offer increased responsivity (i.e., a responsivity increase from <1 amp per watt (A/W) for standard silicon photodiodes to -50 A/W for silicon avalanche photodiodes). This increased responsivity could significantly decrease the time needed to interrogate each security mark or could permit interrogation at greater distances.

### Example 3 Synchronous Detection

A commercial single-phase lock-in amplifier (EG&G Princeton Applied Research Model 5209) was used to analyze the output signals from the Si photodiode circuitry. The LED was electronically modulated using a Stanford Research DG535 pulse generator. The modulated excitation waveform is square-wave, with an independently variable pulse width and pulse frequency. Since a lock-in amplifier with an electronic band-pass filter centered at the LED modulation frequency is used, only the fundamental cos (ωt) component of the Fourier series expansion of the signal resulting from the square-wave excitation is detected. It should be appreciated that a somewhat larger signal could be obtained by modulating the LED output sinusoidally, so that the entire signal appears at a single modulation frequency. The data shown were collected with a lock-in time constant of one second (selected to meet a criterion of a one second read time), corresponding to a detection bandwidth of 0.125 Hz.

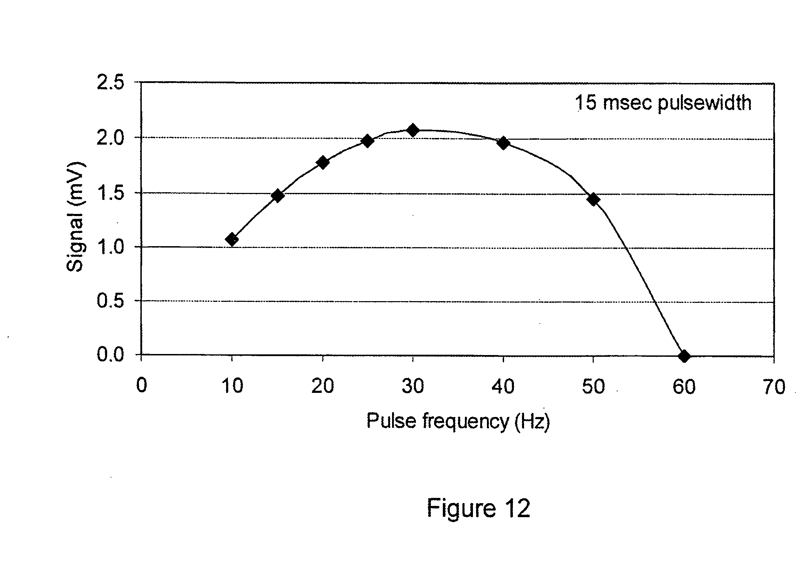

Figure 12 shows a plot of the synchronously detected signal intensity versus pulse frequency for a fixed illumination pulse width of 15 milliseconds (msecs). This pulse width was chosen to be comparable to the luminescence lifetime of a rare earth doped luminescent material. It may be seen that the signal maximizes at a frequency of about 30 Hz, corresponding to a duty cycle of 30 x 0.015 = 0.45, which means that the light source LED is on about one-half of the time. Measurement of the signal as a function of pulse width, maintaining the pulse repetition rate so that the duty cycle remains about 50%, indeed shows that a pulse width of 15 msec (or longer) yields the largest signal. These measurements suggest that pulse widths on the order of the luminescence lifetime, and chopping frequencies roughly one-half of the inverse lifetime, will yield the largest signals.

The following Examples 4-9 demonstrate the operation of the present invention. The apparatus arrangement of Figure 3 was used to measure the luminescence intensity through band-pass filters centered at each of three wavelengths, 589 nanometers, 610 nanometers and 694 nanometers. Specific component parts, with reference numerals shown in Figure 3 are listed in Table 2.

**Table 2 Component Parts in Figure 3**

| **Component** | **Manufacturer** | **Part Number** |
|---|---|---|
| Light-emitting-diode (LED) LED 410 nm (InGaN) (item 22 in Fig. 3) | LED Supply | L3-0-U5TH15-1 |
| Si Photodiode (items 56, 66, 76 in Fig. 3) | UDT Sensors, Inc. | UDT-555D |
| 589 Interference Filter (item 54 in Fig. 3) | Edmund Optics | G43-129 |
| 610 nm Interference Filter (item 64 in Fig. 3) | Edmund Optics | G43-131 |
| 694 nm Interference Filter (item 74 in Fig. 3) | Edmund Optics | G43-142 |
| Lens plano-convex SF-5 AR coated f/1 (items 26, 30, 52, 62, 72 in Fig. 3) | Edmund Optics | P45-504 |
| Dichroic Mirror 45 deg (item 28 in Fig. 3) | Edmund Optics | G47-264 |
| Mirror 50R/50T 1 mm thick (item 58' in Fig. 3) | Edmund Optics | G45-313 |
| Mirror 30R/70T 1 mm thick (item 48' in Figure 3) | Edmund Optics | G45-312 |
| Blue transmitting, visible absorbing filter (item24) | Edmund Optics | G52-530 |
| Blue absorbing, visible transmitting filter (item 34) | Edmund Optics | G52-542 |

### Example 4 Coated sample

A Europium-based commercial phosphor (Kyokko Red LP-RE1 from Kasei Optonix Corp. was mixed with ethyl cellulose (50 weight % phosphor) and β-terpineol by mulling for 5-6 minutes. The resulting paste was screen-printed on standard Avery label stock (No. 8160) using a 325 mesh screen. One coat was applied to each of 5 labels. The films were heated at 110-125 °C for 10 minutes to evaporate any residual solvent.
The printed labels were illuminated for 10 milliseconds by the present apparatus and the luminescence intensities were then measured during a three millisecond window starting about one millisecond later. Intensities were measured through band-pass filters centered at 589 nanometers, 610 nanometers and 694 nanometers for each of the 5 films, the ratios calculated, and the results are given in Table 3. This example demonstrates the ability of the present apparatus to measure a set of characteristic luminescence intensity ratios from a printed security mark.

**Table 3. Example 4 intensity ratios measured with apparatus of Figure 3.**

| Coated sample No. | 589 nm/610 nm | 589 nm/694 nm | 610 nm/694 nm |
|---|---|---|---|
| 1 | 0.254 | 2.86 | 11.3 |
| 2 | 0.256 | 2.86 | 11.2 |
| 3 | 0.256 | 2.83 | 11.1 |
| 4 | 0.255 | 2.85 | 11.2 |
| 5 | 0.254 | 2.88 | 11.3 |
| Average | 0.255±0.001 | 2.86±0.02 | 11.22±0.08 |

### Example 5 Coated sample

A Europium-based commercial phosphor (KX-504A from Kasei Optonix Corp. was mixed with ethyl cellulose (50 weight % phosphor) and β-terpineol by mulling for 5-6 minutes. The resulting paste was screen-printed on standard Avery label stock (No. 8160) using a 325 mesh screen. One coat was applied to each of 12 labels. The films were heated at 110-125 °C for 10 minutes to evaporate any residual solvent.
The printed labels were illuminated for 10 milliseconds by the present apparatus and the luminescence intensities were then measured during a three millisecond window starting about one millisecond later. The luminescence intensities were measured through band-pass filters centered at 589 nanometers, 610 nanometers and 694 nanometers for each of the 12 films, the ratios calculated, and the results are given in Table 4. This example demonstrates the ability of the present apparatus to measure a different set of characteristic luminescence intensity ratios from a different printed security mark.

**Table 4. Example 5 intensity ratios measured with apparatus of Figure 3.**

| Coated sample No. | 589 nm/610 nm | 589 nm/694 nm | 610 nm/694 nm |
|---|---|---|---|
| 1 | 0.964 | 3.145 | 3.264 |
| 2 | 0.958 | 3.065 | 3.199 |
| 3 | 0.963 | 3.041 | 3.157 |
| 4 | 0.975 | 3.145 | 3.225 |
| 5 | 0.961 | 3.069 | 3.195 |
| 6 | 0.955 | 3.056 | 3.199 |
| 7 | 0.951 | 3.039 | 3.195 |
| 8 | 0.949 | 3.022 | 3.184 |
| 9 | 0.928 | 2.984 | 3.217 |
| 10 | 0.929 | 2.991 | 3.219 |
| 11 | 0.955 | 3.037 | 3.181 |
| 12 | 0.941 | 2.980 | 3.167 |
| Average | 0.952±0.014 | 3.048±0.054 | 3.200±0.028 |

### Example 6 Coated sample

A Europium-based commercial phosphor (KX-504A from Kasei Optonix Corp.) was mixed with ethyl cellulose (50 weight % phosphor) and β-terpineol by mulling for 5-6 minutes. The resulting paste was screen-printed on standard Avery label stock (No. 8160) using a 325 mesh screen. Two coats were applied to each of 10 labels. The films were heated at 110-125 °C for 10 minutes to evaporate any residual solvent.
The printed labels were illuminated for 10 milliseconds by the present apparatus and the luminescence intensities were then measured during a three millisecond window starting about one millisecond later. The luminescence intensities were measured through band-pass filters centered at 589 nanometers, 610 nanometers and 694 nanometers for each of the 10 films, the ratios calculated, and the results are given in Table 5. This example demonstrates that the characteristic luminescence ratios measured by the present apparatus are not affected by the print thickness.

**Table 5. Example 6 intensity ratios measured with apparatus of Figure 3.**

| Coated sample No. | 589 nm/610 nm | 589 nm/694 nm | 610 nm/694 nm |
|---|---|---|---|
| 1 | 0.959 | 3.007 | 3.136 |
| 2 | 0.961 | 2.982 | 3.104 |
| 3 | 0.986 | 3.116 | 3.161 |
| 4 | 0.966 | 2.985 | 3.090 |
| 5 | 0.969 | 3.031 | 3.128 |
| 6 | 0.965 | 3.040 | 3.152 |
| 7 | 0.966 | 3.024 | 3.129 |
| 8 | 0.976 | 3.058 | 3.135 |
| 9 | 0.967 | 3.116 | 3.223 |
| 10 | 0.961 | 2.985 | 3.105 |
| Average | 0.968±0.008 | 3.034±0.050 | 3.136±0.037 |

### Example 7 Coated sample

A Europium-based commercial phosphor (KX-504A from Kasei Optonix Corp.) was mixed with ethyl cellulose (50 weight % phosphor) and β-terpineol by mulling for 5-6 minutes. The resulting paste was screen-printed on standard Avery label stock (No. 8160) using a 325 mesh screen. Three coats were applied to each of 11 labels. The films were heated at 110-125 °C for 10 minutes to evaporate any residual solvent.
The printed labels were illuminated for 10 milliseconds by the present apparatus and the luminescence intensities were then measured during a three millisecond window starting about one millisecond later. The luminescence intensities were measured through band-pass filters centered at 589 nanometers, 610 nanometers and 694 nanometers for each of the 11 films, the ratios calculated, and the results are given in Table 6. This example demonstrates that the characteristic luminescence ratios measured by the present apparatus are not affected by the print thickness.

**Table 6. Example 7 intensity ratios measured with apparatus of Figure 3.**

| Coated sample No. | 589 nm/610 nm | 589 nm/694 nm | 610 nm/694 nm |
|---|---|---|---|
| 1 | 0.971 | 2.991 | 3.081 |
| 2 | 0.967 | 2.971 | 3.074 |
| 3 | 0.971 | 3.005 | 3.094 |
| 4 | 0.973 | 2.975 | 3.058 |
| 5 | 0.980 | 3.033 | 3.095 |
| 6 | 0.966 | 2.990 | 3.096 |
| 7 | 0.977 | 3.005 | 3.077 |
| 8 | 0.976 | 3.001 | 3.076 |
| 9 | 0.978 | 3.015 | 3.084 |
| 10 | 0.976 | 3.055 | 3.130 |
| 11 | 0.975 | 2.991 | 3.068 |
| Average | 0.975±0.004 | 3.003±0.025 | 3.085±0.019 |

The following two examples show the presence of both substrate fluorescence and security mark luminescence when using continuous excitation and detection. The examples also demonstrate the elimination of the substrate fluorescence by using pulsed excitation and time-delayed luminescence detection.

### Example 8 Pulsed excitation and time-delayed detection

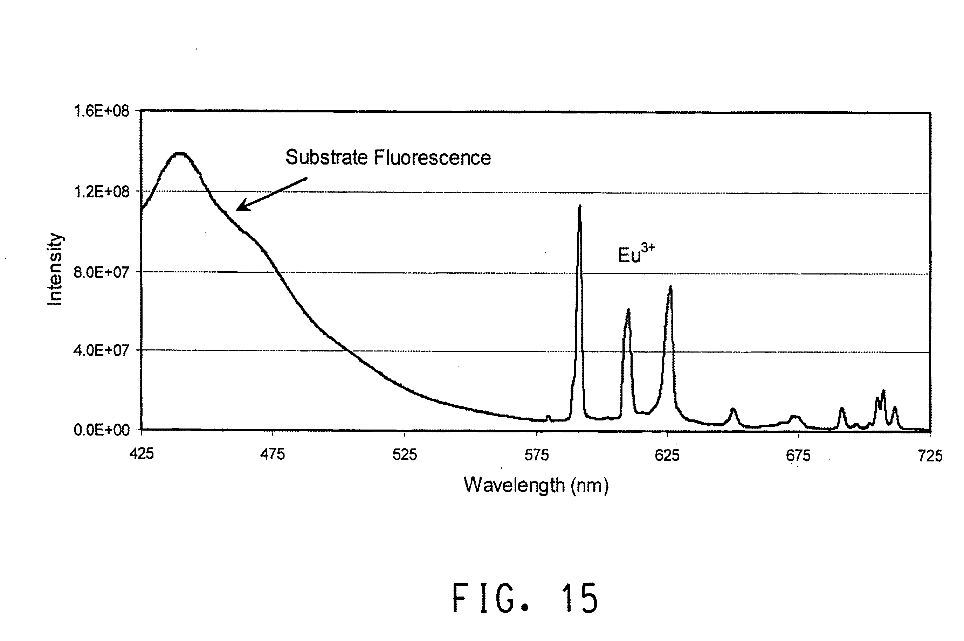

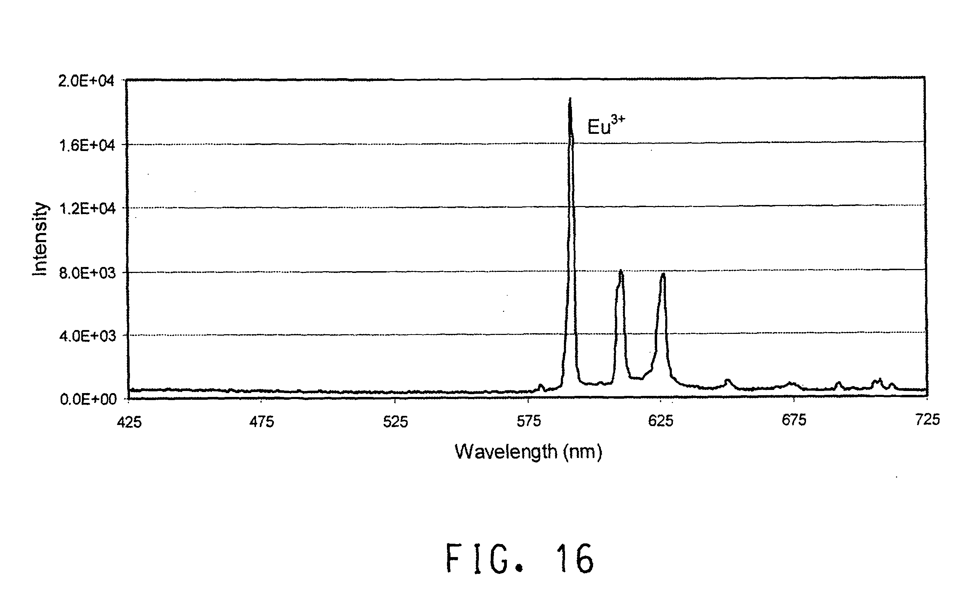

A Europium-based commercial phosphor (Kasei Optonix Corp. KX-504A) was mixed with ethyl cellulose and a solvent (beta-terpineol) by mulling for 5-6 minutes. The resulting paste was screen-printed on standard Avery label stock (No. 8160) using a 325 mesh screen. Two coats were applied to the label, yielding a coating weight of approximately 4.0 mg phosphor/cm². The film was heated to 110-125 °C for 10 minutes to evaporate any residual solvent.
Luminescence spectra were then collected using two different methods. In the first method a commercial SPEX® Model Fluorolog®-3 spectrofluorometer, available from HORIBA Jobin Yvon, Inc. of Edison, NJ, was used to collect a luminescence spectrum. The excitation source was a Xe lamp operated in steady-state mode (i.e. excitation constant in time). The excitation wavelength was 394 nanometers and the resulting luminescence was collected with 1 nanometer spectral resolution and 0.1 nanometer step size. The luminescence spectrum is shown in Figure 15. In the second method a luminescence spectrum was collected using a SPEX® Model Fluorolog®-3 phosphorimeter equipped with a pulsed Xenon light source as the excitation source. The excitation pulse width was 1 microsecond and the pulse repetition rate was 50 Hz. The luminescence was detected 1 msec after the end of the excitation pulse for a time period of 15 msec, i.e. before the arrival time of the subsequent excitation pulse. The excitation wavelength was 394 nanometers and the resulting luminescence was collected with 1 nanometer spectral resolution and 0.5 nanometer step size. The luminescence spectrum is shown in Figure 16.

### Example 9 Pulsed excitation and time-delayed detection

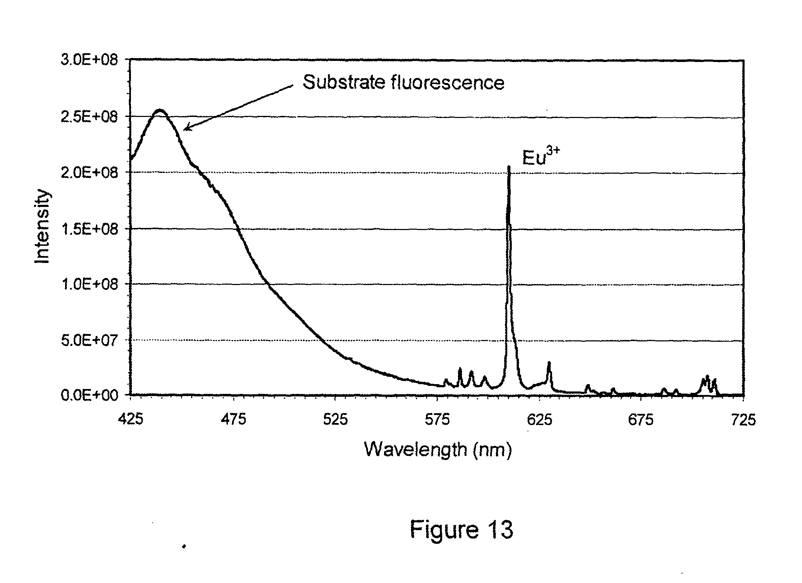

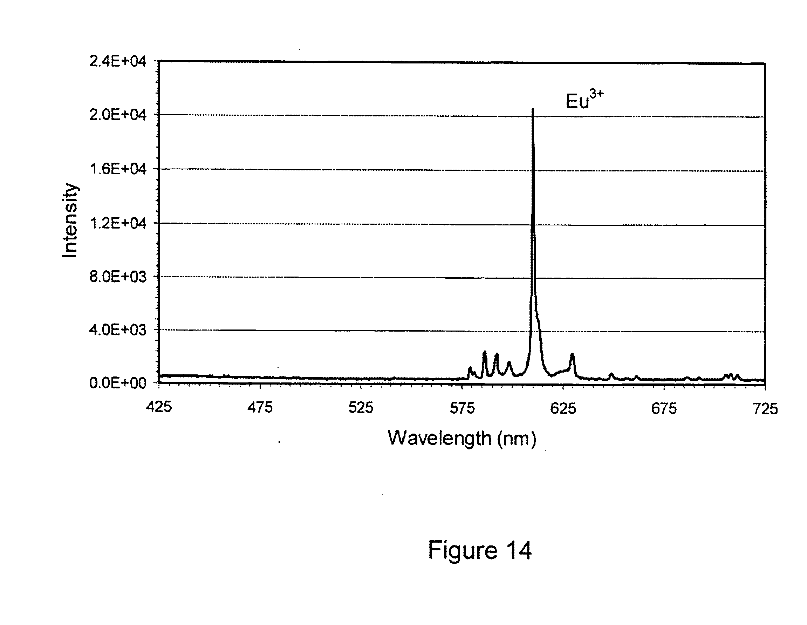

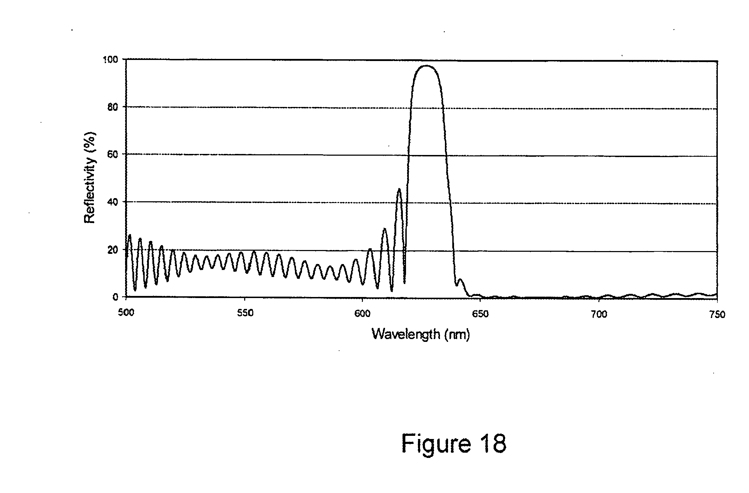

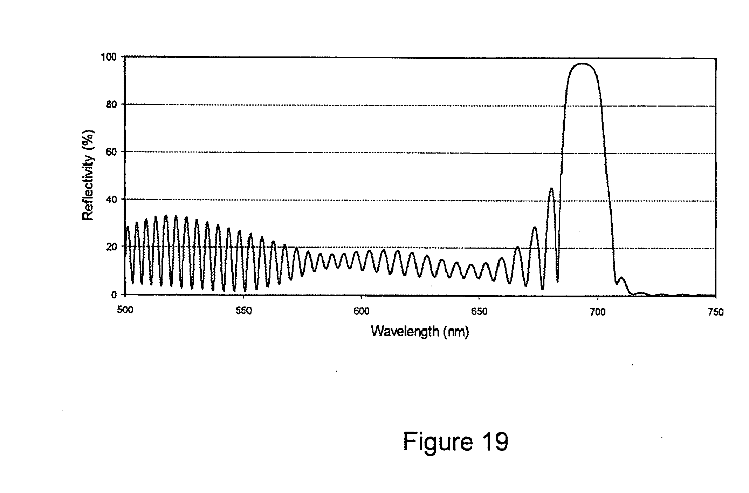

An Europium-based commercial phosphor (Kasei Optonix Corp. LP-RE1) was mixed with ethyl cellulose and a solvent (beta-terpineol) by mulling for 5-6 minutes. The resulting paste was screen-printed on standard Avery label stock (No. 8160) using a 325 mesh screen. One coat was applied to the label, yielding a coating weight of approximately 2.0 mg phosphor/cm². The film was heated to 110-125 °C for 10 minutes to evaporate any residual solvent.
Luminescence spectra were then collected using two different methods. In the first method a commercial SPEX® Model Fluorolog®-3 spectrofluorometer was used to collect a luminescence spectrum. The excitation source was a Xe lamp operated in steady-state mode (i.e. excitation constant in time). The excitation wavelength was 394 nanometers and the resulting luminescence was collected with 1 nanometer spectral resolution and 0.1 nanometer step size. The luminescence spectrum is shown in Figure 13.
In the second method a luminescence spectrum was collected using a SPEX® Model Fluorolog®-3 phosphorimeter equipped with a pulsed Xenon light source as the excitation source. The excitation pulse width was 1 microsecond and the pulse repetition rate was 50 Hz. The luminescence was detected 1 msec after the end of the excitation pulse for a time period of 15 msec, i.e. before the arrival time of the subsequent excitation pulse. The excitation wavelength was 394 nanometers and the resulting luminescence was collected with 1 nanometer spectral resolution and 0.5 nanometer step size. The luminescence spectrum is shown in Figure 14.
Examples 10-13 are based upon calculated performance using discrete notch filters (predicted reflectivity and transmission spectra) supplied by Barr Associates, Inc. of Westford, MA. Discrete notch filters having the spectra illustrated in Figures 18 - 20 are available as custom parts from Barr Associates.

### Example 10 Notch filter

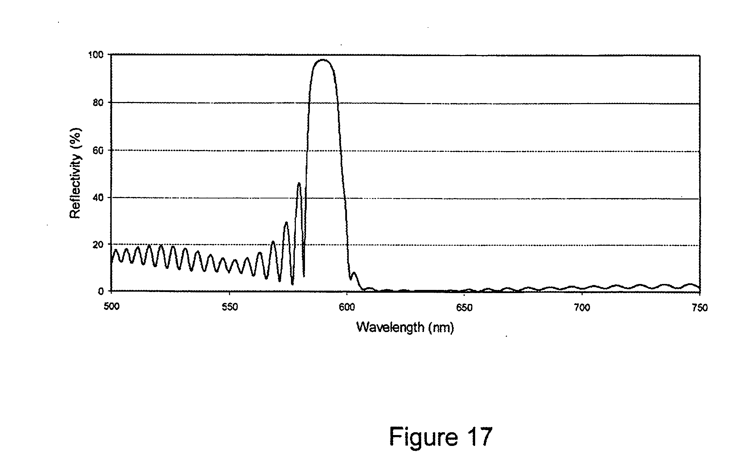

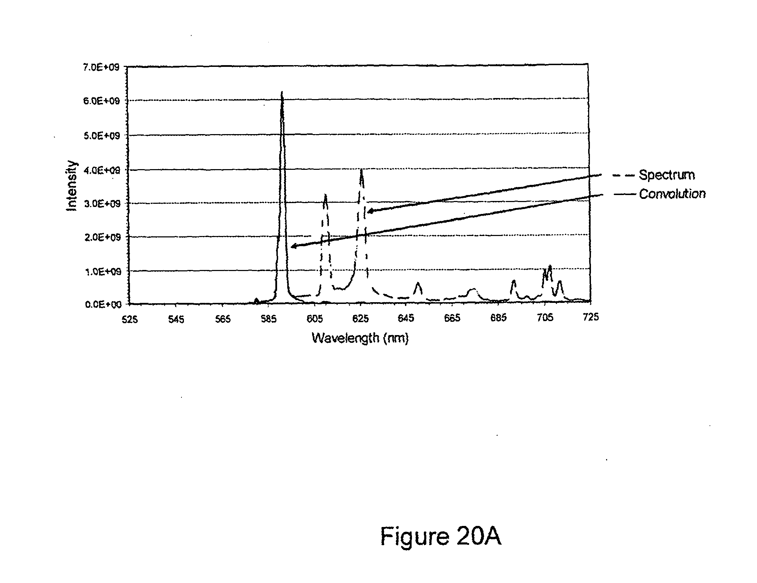

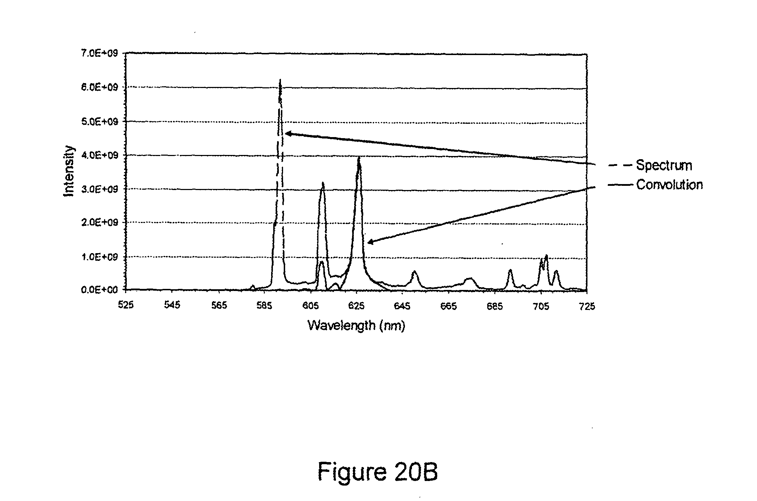

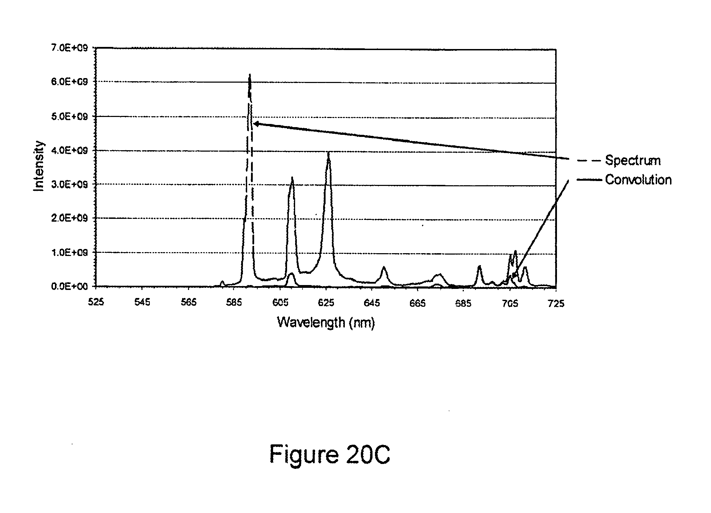

A commercial phosphor (Kasei Optonix KX-504A) that could be used as a security mark provided luminescence peak intensity ratios that were calculated in the following manner: A luminescence spectrum was first measured using a SPEX® Model Fluorolog®-3 spectrometer. The sample was in the form of a powder loaded in a small (4mm diameter) quartz tube. The excitation wavelength was 254 nanometers. The emission spectrum was collected with 1 nanometer spectral resolution and 0.1 nanometer step size. Luminescence data were collected from 470-750 nanometers. Calculated reflectivity and transmission spectra for three discrete notch filters were provided by Barr Associates. The peak reflectivities of the notch filters were centered at wavelengths of 589 nanometers, 627 nanometers, and 694 nanometers. The spectral response of these filters is shown in Figures 17-19, respectively. These calculated spectra were convolved with the luminescence spectrum to generate the spectra expected to be directed to the three photodetectors in an apparatus such as shown in Figure 3. The expected spectra at each of the three photodetectors are shown in Figures 20A-C. The spectrum that would be observed by each detector was then integrated over the range 470-750 nanometers to obtain the signal expected to be produced by each detector. These calculated signals were then used to calculate the intensity ratios listed in Table 7.

**Table 7. Example 10 Intensity ratios at pairs of wavelengths using notch filters**

| Wavelengths (nm) | Intensity ratios |
|---|---|
| 589/627 | 0.841 |
| 589/694 | 2.689 |
| 627/694 | 3.199 |

### Example 11 Notch filter

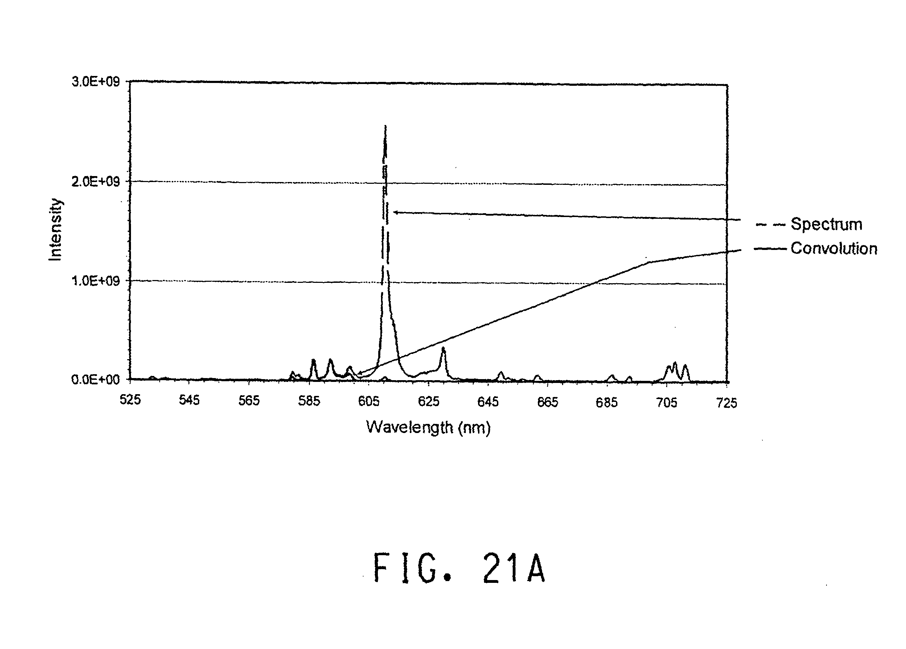

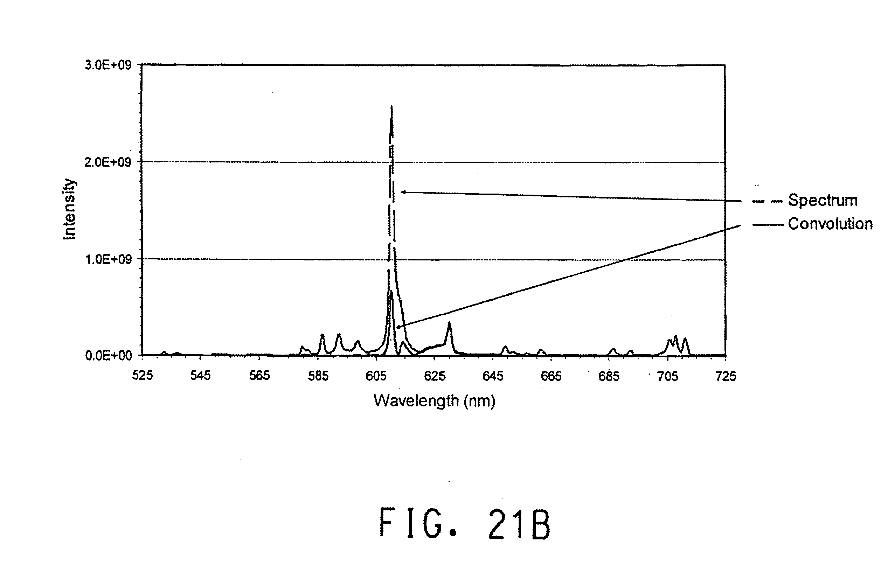

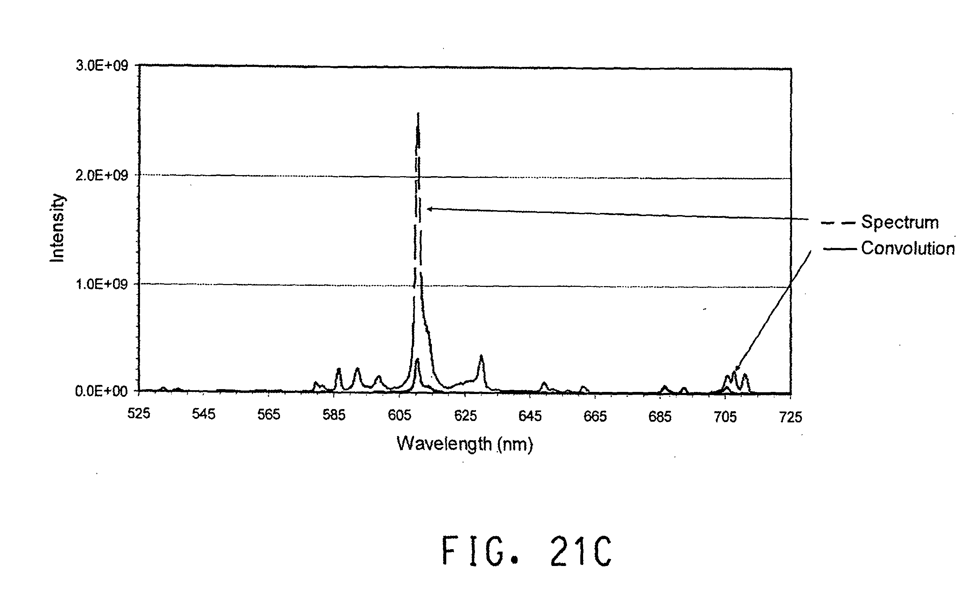

A commercial phosphor (Kasei Optonix LP-RE1) that could be used as a security mark has luminescence peak intensity ratios that were calculated in the following manner: A luminescence spectrum of the LP-RE1 material was first measured using a SPEX® Model Fluorolog®-3 spectrometer. The sample was in the form of a powder loaded in a small (4mm diameter) quartz tube. The excitation wavelength was 254 nanometers. The emission spectrum was collected with 1 nanometer spectral resolution and 0.1 nanometer step size. Luminescence data were collected from 470-750 nanometers.
Calculated reflectivity and transmission spectra for three discrete notch filters were provided by Barr Associates. The peak reflectivities of the notch filters were centered at wavelengths of 589 nanometers, 627 nanometers, and 694 nanometers. When used in the apparatus of Figure 3 these filters would implement the wavelength-selective optical dividers 48", 58" and 68" respectively. The spectral response of these filters is shown in Figures 17-19, respectively. These calculated spectra were each convolved with the luminescence spectrum to generate the spectra expected to be directed to the three photodetectors 56, 66, 76 in an apparatus such as shown in Figure 3. The spectrum that would be observed (Figures 21A-C) by each detector was then integrated over the range 470-750 nanometers to obtain the signal expected for each detector. These calculated signals were then used to calculate the intensity ratios listed in Table 8.

**Table 8. Example 11 Intensity ratios at pairs of wavelengths using notch filters**

| Wavelengths (nm) | Intensity ratios |
|---|---|
| 589/627 | 0.451 |
| 589/694 | 0.936 |
| 627/694 | 2.074 |

Examples 12 and 13 are based upon calculated apparatus performance using Rugate filters whose predicted reflectivity and transmission spectra were supplied by Barr Associates.

### Example 12 Rugate filter

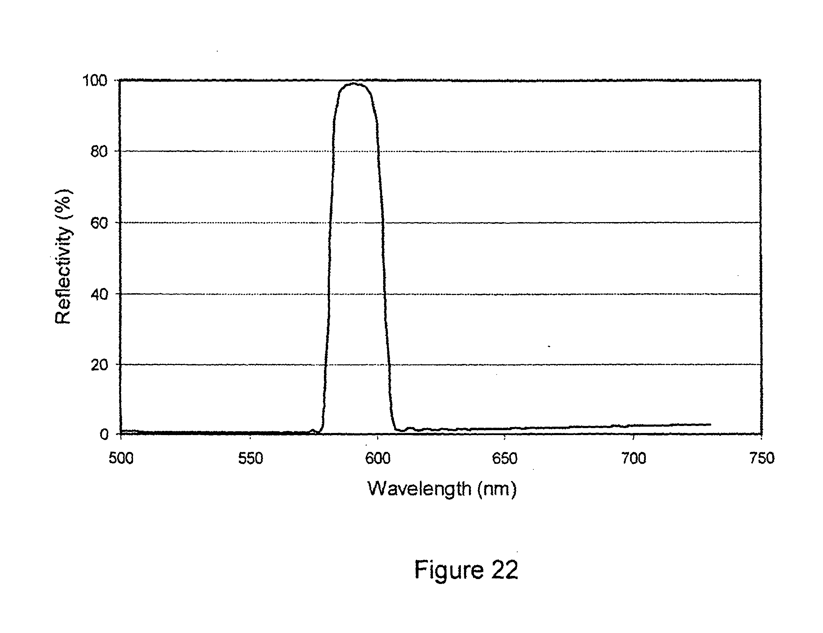

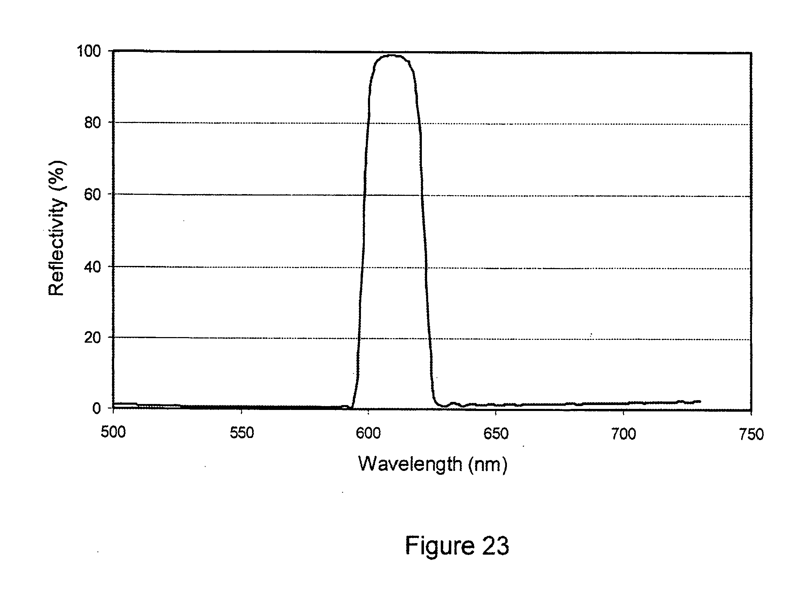

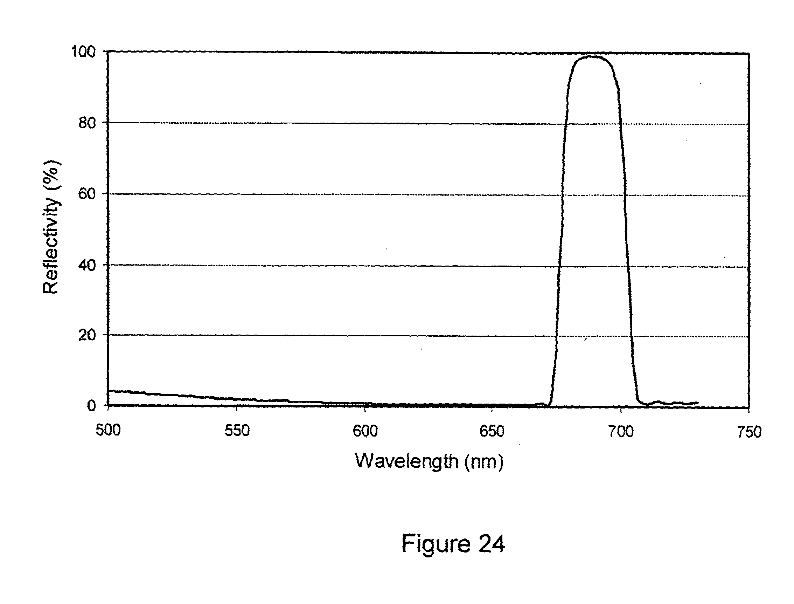

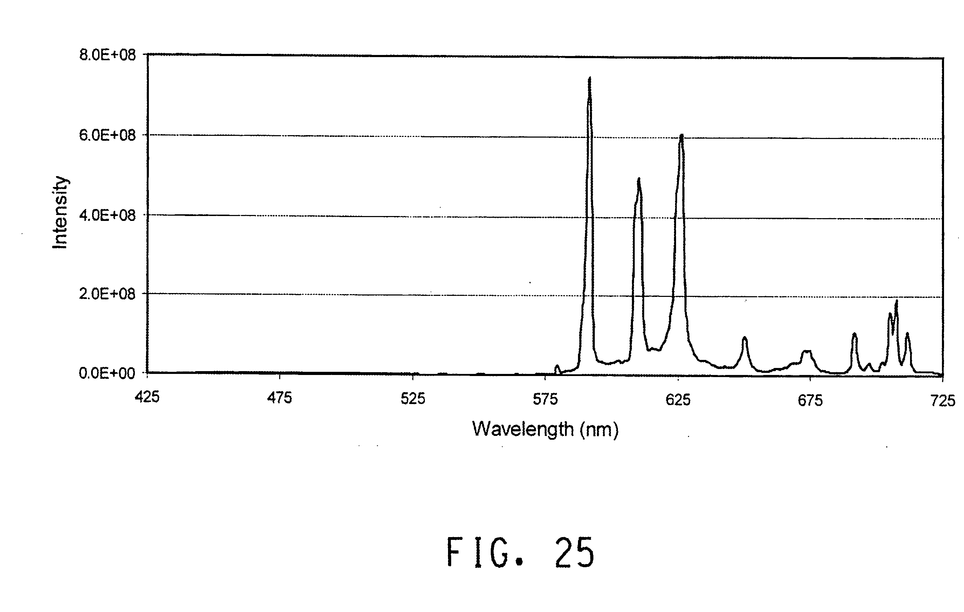

A commercial phosphor (Kasei Optonix KX-504) that could be used as a security mark has luminescence peak intensity ratios that were calculated in the following manner: A luminescence spectrum of the KX-504 material was first measured using a SPEX® Model Fluorolog®-3 spectrometer. The sample was in the form of a powder loaded in a small (4mm diameter) quartz tube. The excitation wavelength was 394 nanometers. The emission spectrum was collected with 1 nanometer spectral resolution and 0.5 nanometer step size. Luminescence data were collected from 425-730 nanometers.
Calculated reflectivity and transmission spectra for three Rugate filters were provided by Barr Associates. The peak reflectivities of the filters were centered at wavelengths of 592 nanometers, 610 nanometers, and 694 nanometers. When used in the apparatus of Figure 3 these filters would implement the wavelength-selective optical dividers 48", 58" and 68" respectively. The calculated spectral response of these Rugate filters is shown in Figures 22 - 24, respectively. These calculated spectra were each convolved with the measured luminescence spectrum to generate the expected spectra (Figures 25A-C) to be directed to the three photodetectors 56, 66, 76 in an apparatus such as shown in Figure 3. The spectrum that would be observed by each detector was then integrated over the range 425-730 nanometers to obtain the signal expected to be produced by each detector. These calculated signals were then used to calculate the intensity ratios listed in the following Table 9.

**Table 9. Example 12 Intensity ratios at pairs of wavelengths using Rugate filters**

| Wavelengths (nm) | Intensity ratios |
|---|---|
| 592/610 | 0.929 |
| 592/694 | 4.015 |
| 610/694 | 4.323 |

### Example 13 Rugate filter

A commercial phosphor (Kasei Optonix LP-RE1) that could be used as a security mark has luminescence peak intensity ratios that were calculated in the following manner: A luminescence spectrum of the LP-RE1 material was first measured using a SPEX® Model Fluorolog®-3 spectrometer. The sample was in the form of a powder loaded in a small (4mm diameter) quartz tube. The excitation wavelength was 394 nanometers. The emission spectrum was collected with 1 nanometer spectral resolution and 0.5 nanometer step size. Luminescence data were collected from 425-730 nanometers. Calculated reflectivity and transmission spectra for three discrete notch filters were provided by Barr Associates.

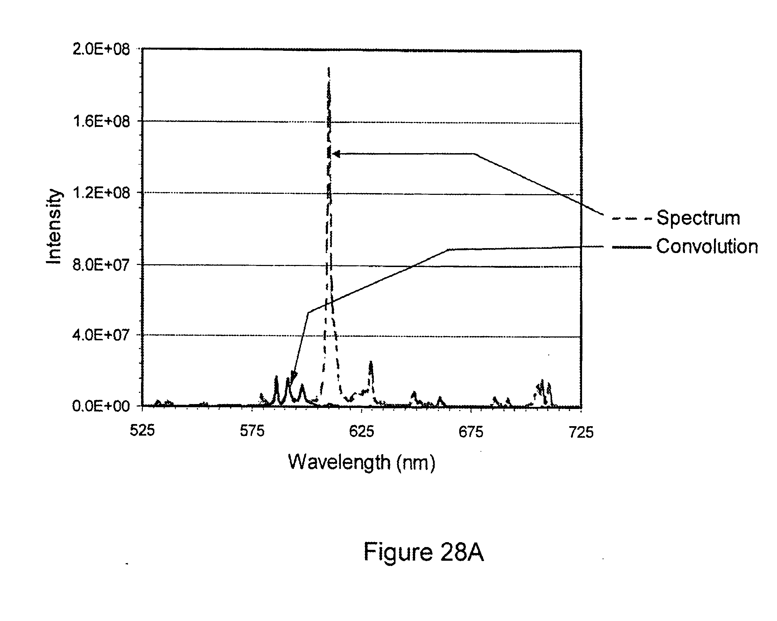

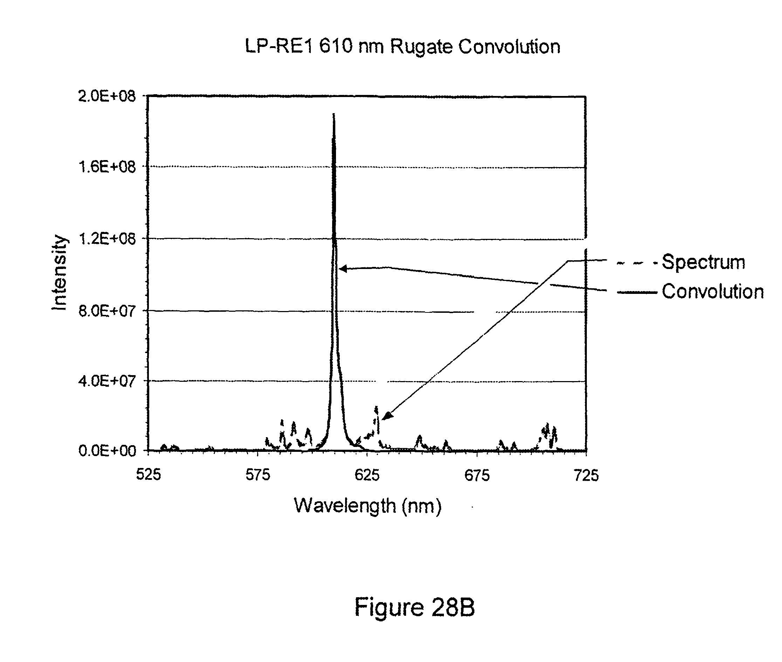

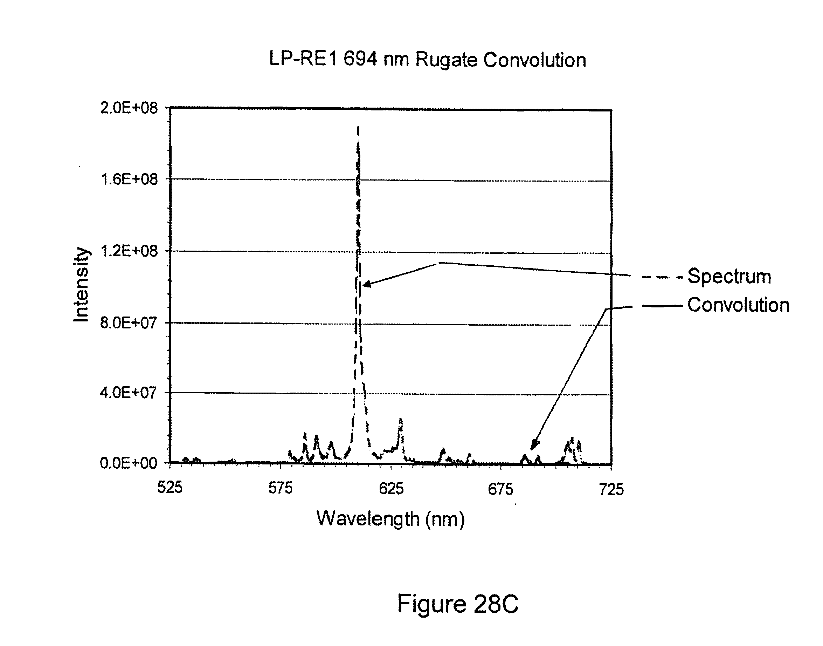

The peak reflectivities of the notch filters were centered at wavelengths of 592 nanometers, 610 nanometers, and 694 nanometers. When used in the apparatus of Figure 3 these filters would implement the wavelength-selective optical dividers 48", 58" and 68" respectively. These calculated spectra were each convolved with the luminescence spectrum to generate the spectra (Figure 28A-C) expected to be directed to the three photodetectors 56, 66, 76 in an apparatus such as shown in Figure 3. The spectrum that would be observed by each detector was then integrated over the range 425-730 nanometers to obtain the signal expected to be produced by each detector. These calculated signals were then used to calculate the intensity ratios listed in Table 10.

**Table 10. Example 13 Intensity ratios at pairs of wavelengths using Rugate filter**

| Wavelengths (nm) | Intensity ratios |
|---|---|
| 592/610 | 0.231 |
| 592/694 | 3.848 |
| 610/694 | 16.676 |

Those skilled in the art, having the benefit of the teachings of the present invention may impart modifications thereto. Such modifications are to be construed as lying within the scope of the present invention, as defined by the appended claims.

## Claims

1. An apparatus for verifying the authenticity of an item bearing a luminescent security mark, the mark comprising a luminescent material which absorbs light within a first predetermined range of wavelengths and which emits luminescence within a plurality of predetermined wavelength ranges with a characteristic time response, the apparatus comprising:
a) an illumination assembly,
b) a luminescence detector assembly,
c) a signal processor assembly, and
d) a housing,
the illumination assembly and the luminescence detector assembly having a common focusing lens and being arranged along a common primary axis to illuminate the security mark and to detect luminescence from the security mark in a retro-reflective manner;
i) the illumination assembly, for illuminating the security mark, comprising a pulsed source having a wavelength output range corresponding to the first predetermined absorption range of wavelengths of the security mark,
ii) the luminescence detector assembly comprising the focusing lens and a plurality of photodetector assemblies, each arranged along a secondary axis and having a photodetector for detecting the luminescence within one of a plurality of predetermined wavelength ranges of interest and converting the detected luminescence into an electrical signal,
wherein optical pathlengths along the primary and secondary axis from the security mark to a photodetector of each photodetector assembly are substantially equal;
iii) the signal processor assembly receives the electrical signals from each of the plurality of photodetectors corresponding to each pulse of light from the illuminating assembly, and determines the authenticity of the luminescent security mark.

2. The apparatus of claim 1, wherein each predetermined wavelength range of interest corresponds to either:
a) a wavelength band of expected luminescence; or
b) to a wavelength band outside of the expected luminescence wavelength ranges of the security mark.

3. The apparatus of claim 1, wherein each photodetector has a preamplifier associated therewith and the gains of the photodetector preamplifiers are selected in accordance with the expected intensity of the luminescence.

4. The apparatus of claim 1, wherein the illumination assembly has elements positioned along an illuminator axis comprising:
A) a pulsed source of substantially collimated light comprising a light source and a collimating lens, the duration of each pulse and the pulse repetition frequency being predetermined;
B) a first band-pass filter for passing only the first predetermined wavelength range of light;
C) a wavelength-selective beam splitter positioned at the intersection of the illuminator axis and the primary axis for reflecting the first wavelength range of light and directing the light along the primary axis to the focusing lens;
D) the focusing lens being positioned along the primary axis for focusing the first wavelength range of light onto the security mark on the item; and
E) a monitoring photodetector positioned on the illuminator axis receiving light from the illumination source that passes through the wavelength-selective beam splitter, thereby monitoring the output intensity of the illumination source and creating an electrical signal representative of the monitored illumination intensity.

5. The apparatus of claim 1, wherein each photodetector assembly comprises an optical divider positioned along the primary axis, a band-pass filter, a lens, and a photodetector positioned along a secondary axis,
wherein:
A) the focusing lens collects the light emitted by the security mark and directs the light along the primary axis in a substantially collimated manner, the light passing through the wavelength-selective beam splitter of the illumination assembly and along the primary axis to the plurality of photodetector assemblies;
B) the optical divider of each photodetector assembly receives the substantially collimated light from the focusing lens, reflects a portion of the received light onto the secondary axis and transmits a portion of the received light along the primary axis;
C) the band-pass filter receives the reflected light from the optical divider and passes only a predetermined wavelength range corresponding to a wavelength band of interest;
D) the lens focuses the light passing through the band-pass filter onto the photodetector; and
E) the photodetector detects light within a predetermined wavelength range of interest and creates an electrical signal representative of the detected light.

6. The apparatus of claim 1, wherein each optical divider in the luminescence detector assembly is non-wavelength-selective.

7. The apparatus of claim 5, wherein the wavelength ranges of the band-pass optical filters are selected in accordance with the expected wavelength bands of luminescence.

8. The apparatus of claim 1, wherein each photodetector assembly comprises a wavelength-selective optical divider positioned along the primary axis, a lens, and a photodetector positioned along a secondary axis, wherein:
A) the focusing lens collects the light emitted by the security mark and directs the light along the primary axis in a substantially collimated manner, the light passing through the wavelength-selective beam splitter of the illumination assembly and along the primary axis to the plurality of photodetector assemblies;
B) the wavelength-selective optical divider of each photodetector assembly receives the substantially collimated light from the focusing lens, reflects a predetermined wavelength range of the received light onto the secondary axis and transmits the remaining wavelength ranges of the received light along the primary axis;
C) the lens focuses the predetermined wavelength range of the received light onto the photodetector; and
D) the photodetector detects light within a predetermined wavelength range of interest and creates an electrical signal representative of the detected light.

9. The apparatus of claim 8, wherein the wavelength reflection bands of the wavelength-selective optical dividers are selected in accordance with the expected wavelength bands of luminescence.

10. The apparatus of claim 8, further comprising, between the lens and the photodetector, a band-pass filter, wherein-the band-pass filter receives the reflected light from the optical divider and passes only a predetermined wavelength range corresponding to a wavelength band of interest to the photodetector.

11. The apparatus of claim 1, wherein the signal processor further:
A) generates a time reference signal corresponding to the occurrence of each illumination pulse;
B) samples the outputs of each of the plurality of photodetectors at predetermined time intervals after the time reference signal, the sampling corresponding to the characteristic time response of the luminescent material, the sampled outputs being stored in a memory;
C) selects samples of each photodetector signal at corresponding times after the time reference signal;
D) calculates the ratios of the selected samples from pairs of photodetector signals corresponding to pairs of wavelength bands,
E) compares the ratios to predetermined ranges of expected ratios for the wavelength bands; and
F) logically combines the results of the comparisons of D) and E) to determine the authenticity of the luminescent security mark.

12. The apparatus of claim 11, wherein the signal processor after A) further:
A1) generates a reference level from the detected output of the monitoring photodetector in the illumination assembly, the reference level being stored in a memory;
and after B) further:
B1) reads the sampled outputs from the memory, and normalizes the sampled outputs using the reference level; and
B2) stores the normalized sampled outputs in the memory.

13. The apparatus of claim 11, wherein the signal processor after B):
B1) reads the sampled outputs from the memory,
B2) averages the samples of each photodetector signal over a predetermined number of illumination pulses to create an averaged set of samples for each photodetector signal, and
B3) stores the averaged sampled outputs in the memory.

14. The apparatus of claim 1, wherein the pulsed source of light comprises one or more light emitting diodes.

15. The apparatus of claim 1, wherein the pulsed source of light comprises a laser diode.

16. The apparatus of claim 1, wherein each photodetector is a silicon photodiode.

17. The apparatus of claim 1, wherein each photodetector is a silicon avalanche photodiode.

18. The apparatus of claim 1, wherein the signal processor provides a visual or audible indication of the authenticity of the security mark.

19. The apparatus of claim 1, wherein the signal processor compares the reference level from the detected output of the monitoring photodetector in the illumination assembly with a predetermined criterion to determine if each light pulse is sufficiently bright to produce a valid indication of the authenticity of the security mark.

20. The apparatus of claim 1, wherein the signal processor compares the averaged signal level from each photodetector assembly with predetermined criteria to determine if the photodetector assembly is functioning properly.

21. An apparatus for verifying the authenticity of an item bearing a luminescent security mark, the mark comprising a luminescent material which absorbs light within a first predetermined range of wavelengths and which emits luminescence within a plurality of predetermined wavelength ranges with a characteristic time response, the apparatus comprising:
a) an illumination assembly,
b) a luminescence detector assembly,
c) a signal processor assembly, and
d) a housing,
the illumination assembly and the luminescence detector assembly having a common focusing lens and being arranged along a common primary axis to illuminate the security mark and to detect emitted light from the security mark in a retro-reflective manner;
i) the illumination assembly, for illuminating the security mark, having a wavelength output range corresponding to the first predetermined absorption range of wavelengths of the security mark, the illumination assembly having elements positioned along an illuminator axis comprising:
A) a pulsed source of substantially collimated light comprising a light source and a collimating lens, the duration of each pulse and the pulse repetition frequency being predetermined;
B) a first band-pass filter for passing only the first predetermined wavelength range of light;
C) a wavelength-selective beam splitter positioned at the intersection of the illuminator axis and the primary axis for reflecting the first wavelength range of light and directing the light along the primary axis to the focusing lens;
D) the focusing lens being positioned along the primary axis for focusing the first wavelength range of light onto the security mark on the item; and
E) a monitoring photodetector positioned on the illuminator axis receiving light from the illumination source that passes through the wavelength-selective beam splitter, thereby monitoring the output intensity of the illumination source and creating an electrical signal representative of the monitored illumination intensity;
ii) the luminescence detector assembly for detecting the light emitted by luminescent material in the security mark and for converting the detected emitted light into an electrical signal, the luminescence detector assembly comprising the focusing lens, and a plurality of photodetector assemblies, each photodetector assembly comprising an optical divider positioned along the primary axis, a band-pass filter, a lens, and a photodetector positioned along a secondary axis, wherein:
A) the focusing lens collects the light emitted by the security mark and directs the light along the primary axis in a substantially collimated manner, the light passing through the wavelength-selective beam splitter of the illumination assembly along the primary axis to the plurality of photodetector assemblies;
B) the optical divider of each photodetector assembly receives the substantially collimated light from the focusing lens, reflects a portion of the received light onto the secondary axis and transmits a portion of the received light along the primary axis;
C) the band-pass filter receives the reflected light from the beam splitter and passes only a predetermined wavelength range of the light corresponding to a wavelength band of interest;
D) the lens focuses the light passing through the band-pass filter onto the photodetector;
E) the photodetector detects light within a predetermined wavelength range of interest and creates an electrical signal representative of the detected light;
wherein the optical pathlengths along the primary and secondary axes from the security mark to the photodetector of each photodetector assembly are substantially equal;
iii) the signal processor assembly receives the electrical signals from each of the plurality of photodetectors corresponding to each pulse of light from the illuminating assembly, the signal processor:
A) generates a time reference signal corresponding to the occurrence of each illumination pulse and generates a reference level from the detected output of the monitoring photodetector in the illumination assembly, the reference level being stored in a memory;
B) samples the outputs of each of the plurality of photodetectors at predetermined time intervals after the time reference signal, the sampling corresponding to characteristic time response of the luminescent material, the sampled outputs being stored in a memory;
C) selects samples of each photodetector signal at corresponding times after the time reference signal;
D) calculates the ratios of the selected samples from pairs of photodetector signals corresponding to pairs of wavelength bands,
E) compares the ratios to predetermined ranges of expected ratios for the wavelength bands; and
F) logically combines the results of the comparisons of D) and E) to determine the authenticity of the luminescent security mark.

22. An apparatus for verifying the authenticity of an item bearing a luminescent security mark, the mark comprising a luminescent material which absorbs light within a first predetermined range of wavelengths and emits luminescence within at least second and third predetermined wavelength ranges with a characteristic time response, the apparatus comprising:
a) an illumination assembly,
b) a luminescence detector assembly,
c) a signal processor assembly, and
d) a housing, the illumination assembly and the luminescence detector assembly having a common focusing lens and being arranged along a common primary axis to illuminate the security mark and to detect emitted light from the security mark in a retro-reflective manner;
i) the illumination assembly, for illuminating the security mark, having a wavelength output range corresponding to the first predetermined absorption range of wavelengths of the security mark, the illumination assembly having elements positioned along an illumination axis comprising:
A) a pulsed source of substantially collimated light comprising a light source and a collimating lens, the duration of each pulse and the pulse repetition frequency being predetermined;
B) a first band-pass filter for passing only the first predetermined wavelength range of light ;
C) a wavelength-selective beam splitter positioned at the intersection of the illuminator axis and the primary axis for reflecting the first wavelength range of light and directing the light along the primary axis to the focusing lens;
D) the focusing lens being positioned along the primary axis for focusing the first wavelength range of light onto the security mark on the item;
ii) the luminescence detector assembly for detecting the light emitted by the security mark and converting the detected emitted light into an electrical signal, the luminescence detector assembly comprising the focusing lens, a first photodetector assembly, a second photodetector assembly and a third photodetector assembly, each photodetector assembly comprising an optical divider positioned along the primary axis, a band-pass filter, a lens, and a photodetector positioned along a respective secondary axis,
wherein:
A) the focusing lens collects the light emitted by the security mark and directs the light along the primary axis in a substantially collimated manner, the light passing through the wavelength-selective beam splitter along the primary axis to the first photodetector assembly;
B) the first photodetector assembly comprising an optical divider positioned along the primary axis and a band-pass filter, a lens, and a photodetector positioned along a secondary axis: wherein:
1) the optical divider receives light from the focusing lens, reflects a portion of the received light onto the secondary axis and transmits a portion of the received light along the primary axis;
2) the band-pass filter receives the reflected light from the optical divider and passes only a first predetermined wavelength range corresponding to a wavelength band of expected luminescence from the security mark;
3) the lens focuses the light passing through the band-pass filter onto the photodetector;
4) the photodetector receives the light passing through the band-pass filter and detects the light within the first expected luminescence wavelength range of the security mark and creates an electrical signal representative of the detected light;
C) the second photodetector assembly comprising an optical divider positioned along the primary axis and a band-pass filter, a lens, and a photodetector positioned along a secondary axis, wherein:
1) the beam splitter receives light transmitted along the primary axis, the beam splitter reflects a portion of the received light onto a secondary axis and transmits a portion of the received light along the primary axis;
2) the band-pass filter receives light reflected along the secondary axis and passes only a second predetermined wavelength range of light corresponding to a second wavelength band of expected luminescence;
3) the lens focuses the light passing through the band-pass filter onto the photodetector;
4) the photodetector receives light transmitted through the band-pass filter and detects a wavelength range of light within the second wavelength band of expected luminescence and creates an electrical signal representative of the detected light;
D) the third photodetector assembly comprising a band-pass filter, a lens, and a photodetector positioned along the primary axis, wherein:
1) the band-pass filter receives light transmitted along the axis and passes only a third predetermined wavelength range of light,
2) the lens focuses the light passing through the band-pass filter onto the photodetector;
3) the photodetector receives light transmitted through the band-pass filter and detects the wavelength range of light within the third wavelength band and creates an electrical signal representative of the detected light;
wherein the optical pathlengths along the primary and secondary axes from the security mark to the photodetector of the first photodetector assembly, from the security mark to the photodetector of the second photodetector assembly and from the security mark to the photodetector of the third photodetector are substantially equal;
iii) the signal processor assembly receives the electrical signals from the monitoring photodetector of the illumination assembly and from the photodetectors of the first, the second, and the third photodetector assemblies, the signal processor:
A) generates a time reference signal corresponding to the end of each illumination pulse;
B) samples the outputs of the photodetectors of the first, the second, and the third photodetector assemblies within a predetermined time interval after the time reference signal in accordance with the characteristic time response of the luminescent material, the sampled outputs being stored in a memory;
C) repeats B) for a predetermined number of illumination pulses and averages the stored samples;
D) determines the ratios of the corresponding averaged samples from each of the photodetector assemblies;
E) compares the ratios to predetermined ranges of expected ratios of an authentic security mark; and
F) logically combines the results of the comparisons of E) to determine the authenticity of the luminescent security mark.

23. The apparatus of claim 22, the illumination assembly of ii) further comprising:
E) a monitoring photodetector positioned on the illuminator axis receiving light from the illumination source that passes through the first wavelength-selective beam splitter, thereby monitoring the output intensity of the illumination source and creating an electrical signal representative of the monitored illumination intensity.

24. The apparatus of claim 22, further comprising the signal processor, after step iii A):
A1) generates a reference level from the detected output of the monitoring photodetector, the reference level being stored in a memory, and, after step iii B):
B1) normalizes the stored samples from the photodetectors of the first, the second, and the third photodetector assemblies using the stored reference level.

25. The apparatus of claim 22, wherein the third predetermined wavelength range corresponds to either:
a) a third wavelength band of expected luminescence of the security mark; or
b) a wavelength band outside of the expected luminescence wavelength ranges of the security mark.

26. The apparatus of claim 22, wherein the signal processor assembly, after iii) C) further:
C1) compares averaged samples from the third photodetector within a predetermined time interval after the time reference signal to detect the absence of light outside the wavelength range of the expected luminescence to confirm the absence of an unexpected luminescence in the third wavelength band.

27. The apparatus of claim 22, wherein the optical divider of ii) B) of the first photodetector assembly of the luminescence detector assembly comprises a wavelength-selective optical divider positioned along the primary axis, wherein:
1) the wavelength-selective optical divider receives the substantially collimated light from the focusing lens, reflects a first predetermined wavelength range of the received light onto the secondary axis and transmits the remaining wavelength ranges of the received light along the primary axis;
2) the lens receives the predetermined wavelength range of reflected light from the wavelength-selective optical divider and focuses the light onto the photodetector;
3) the photodetector receives the light from the lens and detects the light within the first predetermined wavelength range and creates an electrical signal representative of the detected light.

28. The apparatus of claim 27, wherein the wavelength reflection range of the wavelength-selective optical divider is selected in accordance with an expected wavelength band of luminescence of the luminescent security

29. The apparatus of claim 28, further comprising, between the wavelength-selective optical divider and the photodetector, a band-pass filter, wherein-the band-pass filter receives the reflected light from the optical divider and passes only a predetermined wavelength range corresponding to a wavelength band of interest to the photodetector.

30. A method for verifying the authenticity of an item bearing a luminescent security mark, the mark comprising a luminescent material which absorbs light within a first predetermined range of wavelengths and emits luminescence within at least second and third predetermined wavelength ranges with a characteristic time response, the method comprising:
a) generating a timing signal;
b) illuminating the security mark with a focused source of light within the first predetermined range of wavelengths for a predetermined time period sufficient to cause the luminescent material to emit luminescence at a substantially constant level;
c) detecting the luminescence with a plurality of photodetectors, the light impinging on each photodetector being within a predetermined narrow wavelength range, the wavelength ranges being selected such that at least two wavelength ranges correspond to expected luminescence spectral bands and at least one wavelength range is selected at a wavelength range where a luminescence spectral band is not expected, each photodetector generating an electrical signal;
d) receiving the timing signal and receiving each of the plurality of electrical photodetector signals in a signal processing unit, the signal processing unit performing the steps of:
i) waiting a predetermined second time interval for background fluorescence to substantially decay;
ii) digitizing a predetermined number of samples of each photodetector signal in a time sequence and storing the samples in a memory array;
e) waiting a predetermined third time interval to allow the luminescence to substantially decay;
f) repeating steps a) through e) a predetermined number of times;
g) synchronously detecting each photodetector signal by averaging corresponding samples of the time sequence from that photodetector to create an enhanced photodetector signal;
h) comparing the enhanced two or more expected luminescence signals and the enhanced at least one unexpected luminescence signal with predetermined thresholds; and
h) logically combining the results of the comparisons to verify the authenticity of the security mark.

31. The method of claim 30, further comprising utilizing a beam splitter and a reference photodetector to monitor the output intensity of each interval of illumination from the illumination source and to provide a reference signal to the signal processing unit, the signal processing unit using the reference signal to normalize each time sequence of digitized samples from each photodetector.

32. The method of claim 30, further comprising illuminating the security mark and detecting the emitted luminescence in a coaxial retroreflective manner.

33. The method of claim 30, wherein the plurality of photodetectors are positioned so that optical pathlengths from the security mark to each photodetector is equal.

34. The apparatus of claim 1, wherein the apparatus is adapted for portable, hand-held use and wherein the apparatus is battery powered.
